# EUROPEAN PATENT APPLICATION

(11) **EP 4 811 087 A1**
(43) Date of publication of application: **23.09.2026**
(21) Application number: 24907714.0
(22) Date of filing: 16.10.2024
(51) Int. Cl.: G06F 3/046, G06F 3/04842, G06F 1/16, H04W 4/80, G06F 3/03, G06F 3/0484

(54) **ELECTRONIC DEVICE AND METHOD FOR IDENTIFYING WEARABLE DEVICE LOCATED ON DISPLAY**

(30) Priority: 22.12.2023 KR 20230190538; 25.01.2024 KR 20240011786
(71) Applicant: Samsung Electronics Co., Ltd., Suwon-si, Gyeonggi-do 16677 (KR)
(72) Inventor: YOO, Nagyeom, Suwon-si Gyeonggi-do 16677 (KR); PARK, Jeongmin, Suwon-si Gyeonggi-do 16677 (KR); CHUN, Jaebong, Suwon-si Gyeonggi-do 16677 (KR)
(74) Representative: Appleyard Lees IP LLP
(86) International application number: PCT/KR2024/015703
(87) International publication number: WO 2025/135429

(57) **Abstract**

According to one embodiment, the electronic device may comprise a display, a communication circuit, a memory for storing instructions, and a processor. When executed by the processor, the instructions can cause the electronic device to: output a light-emitting signal; acquire information about a light-receiving signal identified by a wearable device; identify the light-receiving signal; identify that the wearable device is located on the display; and display information about the wearable device.

## Description

### [Technical Field]

The following descriptions relate to an electronic device and a method for identifying a wearable device located on a display.

### [Background Art]

An electronic device may operate by being connected with a wearable device. In a case that the wearable device does not include a display, information on the wearable device may be displayed through the display of the electronic device. The electronic device may provide a user of the wearable device with information obtained from the wearable device through the display.

The above-described information may be provided as a related art for a purpose of helping understanding of the present disclosure. No claim or determination is raised as to whether any of the above-described descriptions may be applied as a prior art related to the present disclosure.

### [Disclosure]

### [Technical Solution]

According to an embodiment, an electronic device may include a display including at least one of an electromagnetic inductive circuit and a touch screen panel, a communication circuit, memory storing instructions, and a processor. The instructions, when being executed by the processor, may cause the electronic device to identify a touch input of a designated shape. The instructions, when being executed by the processor, may cause the electronic device to, in response to the touch input, output a light emitting signal with a first pattern through an area on the display, corresponding to the touch input. The instructions, when being executed by the processor, may cause the electronic device to obtain, using the communication circuit, information on a light receiving signal identified by a wearable device after outputting the light emitting signal. The instructions, when being executed by the processor, may cause the electronic device to identify, based on the information on the light receiving signal, a second pattern related to the light receiving signal. The instructions, when being executed by the processor, may cause the electronic device to identify, based on the second pattern corresponding to the first pattern, that the wearable device is located on the display. The instructions, when being executed by the processor, may cause the electronic device to display, through the display, information on the wearable device.

According to an embodiment, a method performed by an electronic device, may include identifying a touch input of a designated shape. The method may include, in response to the touch input, outputting a light emitting signal with a first pattern through an area on the display, corresponding to the touch input. The method may include obtaining, using the communication circuit, information on a light receiving signal identified by a wearable device after outputting the light emitting signal. The method may include identifying, based on the information on the light receiving signal, a second pattern related to the light receiving signal. The method may include identifying, based on the second pattern corresponding to the first pattern, that the wearable device is located on the display. The method may include displaying, through the display, information on the wearable device.

According to an embodiment, a non-transitory computer readable storage medium may store one or more programs. The one or more programs may include instructions, which, when being executed by a processor of an electronic device with a display including at least one of an electromagnetic inductive circuit and a touch screen panel, and a communication circuit, cause the electronic device to identify a touch input of a designated shape. The one or more programs may include instructions, which, when being executed by the processor, cause the electronic device to, in response to the touch input, output a light emitting signal with a first pattern through an area on the display, corresponding to the touch input. The one or more programs may include instructions, which, when being executed by the processor, cause the electronic device to obtain, using the communication circuit, information on a light receiving signal identified by a wearable device after outputting the light emitting signal. The one or more programs may include instructions, which, when being executed by the processor, cause the electronic device to identify, based on the information on the light receiving signal, a second pattern related to the light receiving signal. The one or more programs may include instructions, which, when being executed by the processor, cause the electronic device to identify, based on the second pattern corresponding to the first pattern, that the wearable device is located on the display. The one or more programs may include instructions, which, when being executed by the processor, cause the electronic device to display, through the display, information on the wearable device.

### [Description of the Drawings]

FIG. 1 is a block diagram of an electronic device in a network environment.
FIG. 2 illustrates an example of an electronic device and a wearable device.
FIG. 3 illustrates an example of a simplified block diagram of an electronic device and a wearable device.
FIG. 4 illustrates an example of a UWB circuit and a plurality of antennas.
FIG. 5 illustrates an example of a partial cross-sectional view of a wearable device.
FIG. 6 illustrates a flowchart of an operation of an electronic device.
FIG. 7A illustrates an example of an operation of an electronic device and a wearable device.
FIG. 7B illustrates an example of an operation of an electronic device according to contact of a wearable device.
FIG. 8 illustrates an example of an operation of identifying a touch input of a designated shape in an electronic device.
FIG. 9 illustrates an example of a light emitting signal with a first pattern.
FIG. 10 illustrates an example of an operation of an electronic device for identifying at least one touch point.
FIG. 11A illustrates an example of an operation of an electronic device for identifying that a wearable device is located on a display.
FIG. 11B illustrates an example of an operation of an electronic device for identifying that a wearable device is located on a display.
FIG. 12A illustrates an example of an operation of a wearable device for identifying a second pattern of a light receiving signal.
FIG. 12B illustrates an example of an operation of a wearable device for identifying a second pattern of a light receiving signal.
FIG. 12C illustrates an example of an operation of a wearable device for identifying a second pattern of a light receiving signal.
FIG. 13 illustrates an example of an operation of an electronic device and a plurality of wearable devices in a case that the plurality of wearable devices are located on a display of the electronic device.
FIG. 14 illustrates an example of an operation of an electronic device, an external electronic device, and a wearable device in a case that the wearable device is connected with the external electronic device.
FIG. 15A illustrates an example of an operation of an electronic device, an external electronic device, and a plurality of wearable devices in a case that the plurality of wearable devices are located on a display of the electronic device.
FIG. 15B illustrates an example of an operation of an electronic device, an external electronic device, and a plurality of wearable devices in a case that the plurality of wearable devices are located on a display of the electronic device.
FIG. 16A illustrates an example of an operation of a watch-shaped wearable device and a ring-shaped wearable device.
FIG. 16B illustrates an example of an operation of a watch-shaped wearable device and a ring-shaped wearable device.

### [Mode for Invention]

Hereinafter, an embodiment of the present disclosure will be described in detail with reference to a drawing such that those having ordinary knowledge in the art to which the present disclosure belongs may easily implement the present disclosure. However, the present disclosure may be implemented in several different forms and is not limited to the embodiment described herein. In association with a description of the drawing, the same or similar reference numerals may be used for the same or similar components. In addition, in the drawing and the associated description, a description of well-known functions and configurations may be omitted for clarity and brevity.

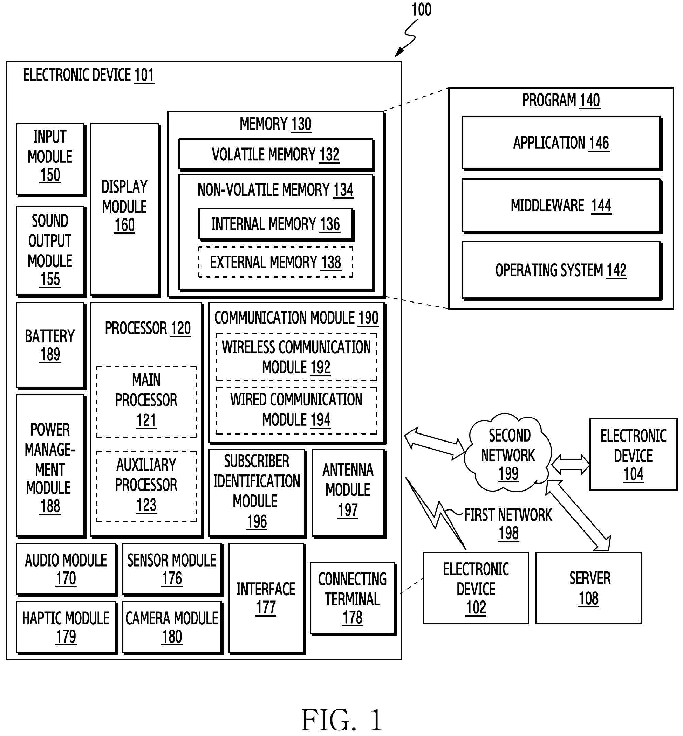

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

According to an embodiment, an electronic device (e.g., the electronic device 101 of FIG. 1) may display information on a wearable device using a display. For example, the electronic device may display information on the wearable device using the display based on identifying that the wearable device is located on the display of the electronic device. In a case that the electronic device is connected with a plurality of wearable devices, it may be necessary to identify the wearable device located on the display of the electronic device. In the following specification, a technical feature for identifying the wearable device (or an identifier (ID) of the wearable device) located on the display of the electronic device will be described.

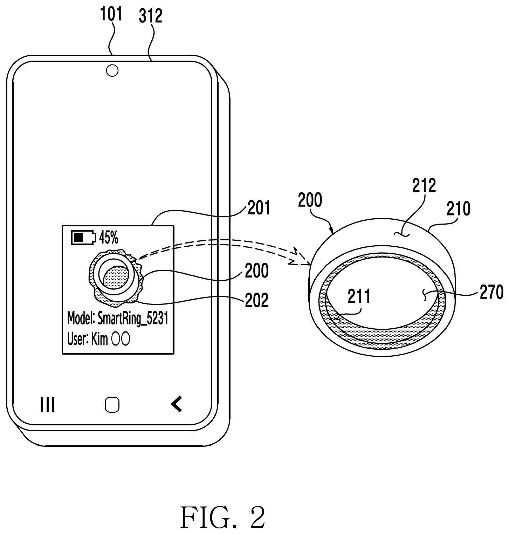

FIG. 2 illustrates an example of an electronic device and a wearable device.

Referring to FIG. 2, an electronic device 101 may correspond to the electronic device 101 of FIG. 1. The electronic device 101 may include a display 312. For example, the electronic device 101 may display information on a wearable device 200 through the display 312.

According to an embodiment, the electronic device 101 may establish a connection with the wearable device 200. The wearable device 200 may be connected with the electronic device 101 using various radio access technologies (RATs) (e.g., Bluetooth communication and wireless LAN (WLAN)). For example, the wearable device 200 may control the electronic device 101 or may be controlled by the electronic device 101. As an example, the wearable device 200 may receive a request for information on a user from the electronic device 101. The wearable device 200 may transmit information on the user to the electronic device 101 based on the request received from the electronic device 101.

According to an embodiment, the electronic device 101 may display information on the wearable device 200 based on identifying that the wearable device 200 is located on the display 312 of the electronic device 101. For example, the wearable device 200 may include a display too small to display information or may not include a display. Accordingly, the electronic device 101 may display a user interface 201 for displaying information on the wearable device 200 based on identifying that the wearable device 200 is located on the display 312 of the electronic device 101. For example, the information on the wearable device 200 may include at least one of information on the user identified through the wearable device 200, remaining battery level of the wearable device 200, information on an account of the wearable device 200, and/or information on a function that may be performed by the wearable device 200. Based on identifying that the wearable device 200 is located on the display 312 of the electronic device 101, through the user interface 201, the electronic device 101 may display at least one of information on the user identified through the wearable device 200, remaining battery level of the wearable device 200, information on an account of the wearable device 200, and/or information on a function that may be performed by the wearable device 200.

For example, the user interface 201 may include a visual object 202 indicating that the wearable device 200 is being in contact with the display 312. For example, the visual object 202 may indicate an area in which the wearable device 200 is in contact with the display 312. For example, the visual object 202 may indicate that information on the wearable device 200 is being displayed through the display 312. For example, the visual object 202 may be displayed to provide various visual effects indicating that the wearable device 200 is being in contact with the display 312. As an example, the visual object 202 may indicate that information on the wearable device 200 is being loaded. As an example, the visual object 202 may include an object indicating that the wearable device 200 is being scanned.

According to an embodiment, the wearable device 200 may be configured to be wearable on a part (e.g., a finger) of a body of the user. For example, the wearable device 200 may be worn on a part of the body of the user. For example, the wearable device 200 may be fastened to a part of the body of the user. For example, the wearable device 200 may be detachable from a part of the body of the user. In order to be worn on a part of the body of the user, for example, the wearable device 200 may have a shape corresponding to a part of the body of the user.

For example, the wearable device 200 may be contacted with a part of the body of the user by being worn by the user. For example, the wearable device 200 may be configured to obtain information on the user through a part of the body of the user by being worn by the user. For example, the wearable device 200 may provide information on the user through the electronic device 101 connected with the wearable device 200 and/or the wearable device 200. However, it is not limited thereto.

According to an embodiment, the wearable device 200 may include a housing 210 including a first surface 211 facing a part (e.g., a finger) of the body of the user and a second surface 212 opposite to the first surface 211. For example, the wearable device 200 may include the ring-shaped housing 210. As an example, the wearable device 200 may be configured in a ring shape. Although FIG. 2 illustrates an example in which a shape of the wearable device 200 is configured in a ring shape, it is not limited thereto. A form and a shape of the wearable device 200 are not limited to an embodiment, and may include various forms (e.g., a quadrangle, an oval, and the like) that may be worn on a part (e.g., a finger, a wrist, or an earlobe) of the body of the user.

According to an embodiment, in a case that the wearable device 200 is worn by the user, at least a portion of the first surface 211 may be in contact with a part of the body of the user. For example, the first surface 211 may surround a part of the body of the user by which the wearable device 200 is worn. For example, the first surface 211 may cover a part of the body of the user by which the wearable device 200 is worn. For example, when the wearable device 200 is worn by the user, the first surface 211 may be configured such that the wearable device 200 is fastened to a part of the body by pressurizing a part of the body of the user. For example, the first surface 211 may be deformable by a part of the body of the user. For example, the wearable device 200 may provide information on the user through the first surface 211 based on haptic technology. As an example, a smart ring device 200 may provide information indicating that a heart rate of the user is greater than or equal to a designated heart rate by outputting vibration. As an example, the smart ring device 200 may provide a notification of a health condition of the user by outputting vibration. As an example, the smart ring device 200 may provide a notification of a schedule set by the user by outputting vibration.

For example, the second surface 212 may form an exterior of the wearable device 200 together with the first surface 211. For example, the second surface 212 may form the ring-shaped housing 210 together with the first surface 211. For example, in a case that the wearable device 200 is worn by the user, the second surface 212 may be a surface spaced apart from a part of the body of the user. For example, the first surface 211 may be referred to as an inner circumference surface of the housing 210. The second surface 212 opposite to the first surface 211 may be referred to as an outer circumference surface of the housing 210.

For example, the second surface 212 may be exposed to the outside in a state that the wearable device 200 is worn by the user. The second surface 212 may be composed of at least one of titanium, stainless steel, and ceramic. The second surface 212 may be composed of a material for protecting against an external impact and/or a scratch. According to an embodiment, the second surface 212 may be coated with an additional material to protect a color of the wearable device 200 and/or the exterior of the wearable device 200.

For example, the first surface 211 may be composed of the same and/or similar material as the second surface 212. According to an embodiment, at least a portion of the first surface 211 may be composed of at least one of a molding material, a transparent plastic, and/or glass for obtaining data. According to an embodiment, at least a portion of the first surface 211 may be composed of a metal for identifying a bio-signal.

According to an embodiment, the wearable device 200 may further include a hole 270 formed by the first surface 211 to pass through a part of the body of the user when the wearable device 200 is worn by the user. For example, in a case that the wearable device 200 is worn by the user, the hole 270 may be penetrated by a part of the body of the user. By including the hole 270 configured to pass through a part of the body of the user, in a case that the user wears the wearable device 200, the wearable device 200 may be configured to be fastened to a part of the body of the user.

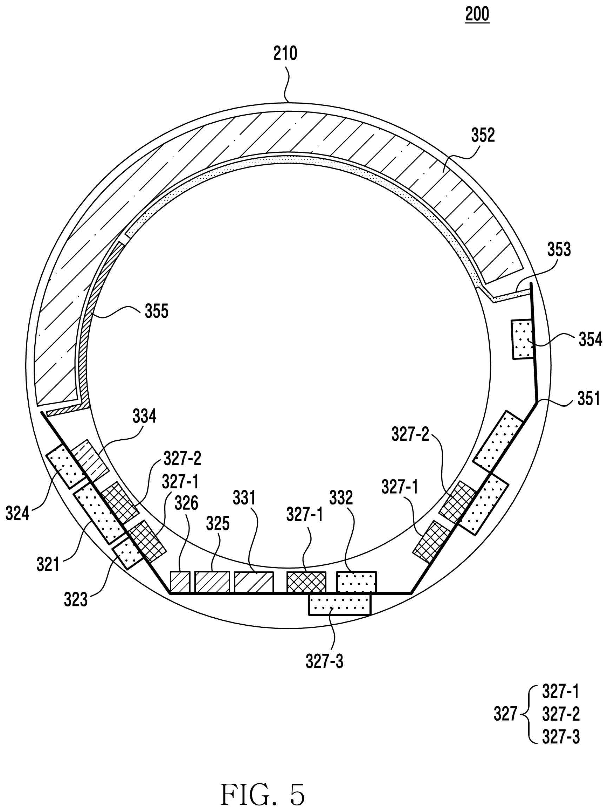

According to an embodiment, the wearable device 200 may further include one or more components between the first surface 211 and the second surface 212. For example, the wearable device 200 may include a communication circuit, one or more sensors, and/or a processor between the first surface 211 and the second surface 212. Disposition of the one or more components will be described later in FIG. 5.

Although the wearable device 200 illustrated in the drawings described below is described as being configured in a ring shape, it is for convenience of description, and a shape of the wearable device 200 is not limited to a ring shape. The shape of the wearable device 200 may include various forms (e.g., a quadrangle, an oval, and the like) that may be worn on a part (e.g., a finger, a wrist, or an earlobe) of the body of the user.

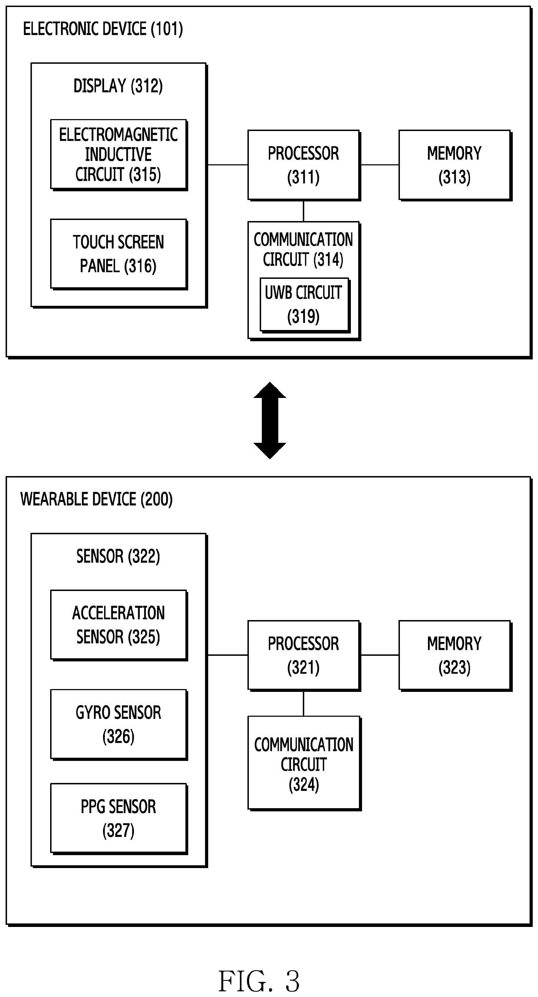

FIG. 3 illustrates an example of a simplified block diagram of an electronic device and a wearable device.

Referring to FIG. 3, a wearable device 200 may operate in a state of being connected with an electronic device 101. For example, the electronic device 101 may be used to control the wearable device 200.

According to an embodiment, the electronic device 101 may include a processor 311, a display 312, memory 313, and/or a communication circuit 314. According to an embodiment, the electronic device 101 may include at least one of the processor 311, the display 312, the memory 313, and the communication circuit 314. For example, at least a portion of the processor 311, the display 312, the memory 313, and the communication circuit 314 may be omitted according to an embodiment.

According to an embodiment, the processor 311 may correspond to the processor 120 of FIG. 1. The processor 311 may be operatively (or operably) coupled with or connected with the display 312, the memory 313, and the communication circuit 314. The processor 311 being operatively coupled with or connected with the display 312, the memory 313, and the communication circuit 314 may mean that the processor 311 may control the display 312, the memory 313, and the communication circuit 314. For example, the display 312, the memory 313, and the communication circuit 314 may be controlled by the processor 311.

Although illustrated based on different blocks, an embodiment is not limited thereto, and a portion (e.g., at least a portion of the processor 311, the communication circuit 314, and the memory 313) of hardware of FIG. 3 may be included in a single integrated circuit, such as a system on a chip (SoC).

According to an embodiment, the processor 311 may be configured with at least one processor. For example, the processor 311 may be configured with a main processor that performs high-performance processing and an auxiliary processor that performs low-power processing.

According to an embodiment, the processor 311 may include a hardware component for processing data based on one or more instructions. The hardware component for processing data may include, for example, an arithmetic and logic unit (ALU), a field programmable gate array (FPGA), and/or a central processing unit (CPU).

For example, the processor 311 may include an application processor, a supplementary processor (e.g., a sensor hub, a microcontroller unit (MCU)), a central processor unit (CPU), a neural processing unit (NPU), a graphic processing unit (GPU), and/or a processor for IoT (e.g., a processor integrated with a communication module).

According to an embodiment, the electronic device 101 may include the display 312. The display 312 may output visualized information to a user. For example, the display 312 may output visualized information to the user by being controlled by the processor 311 that includes a circuit such as the graphic processing unit (GPU). For example, the display 312 may correspond to the display module 160 of FIG. 1.

For example, the display 312 may include an electromagnetic inductive circuit 315 and a touch screen panel 316.

As an example, the electromagnetic inductive circuit 315 may be configured to receive a touch input (or a hovering input) on the display 312. The electromagnetic inductive circuit 315 may be referred to as an electromagnetic resonance (EMR) panel, an electromagnetic panel, and/or a digitizer. The electromagnetic inductive circuit 315 may be used to identify a magnetic field generated based on power being supplied to at least one circuit (e.g., a coil) of an external electronic device (e.g., the wearable device 200, an electronic pen, or a stylus). The processor 311 may identify contact of an external electronic device (e.g., the wearable device 200) with respect to the display 312 by using the electromagnetic inductive circuit 315.

As an example, the touch screen panel 316 may be configured to detect a touch input (or a hovering input) for a specific location of the display 312. For example, the touch screen panel 316 may be configured based on at least one of a capacitive method, a resistive method, an infrared method, and an ultrasonic method. For example, in a case that the touch screen panel 316 is configured based on the capacitive method, the touch screen panel 316 may be configured with a plurality of layers. A first layer of the touch screen panel 316 may include a driving electrode. A second layer of the touch screen panel 316 may include a dielectric material. A third layer of the touch screen panel 316 may include a sensing electrode. The processor 311 may identify a touch input based on identifying a capacitance value changed in a plurality of areas in which the driving electrode and the sensing electrode cross.

According to an embodiment, the electronic device 101 may include the memory 313. The memory 313 may be used to store information or data. For example, the memory 313 may be used to store data received from the wearable device 200. For example, the memory 313 may correspond to the memory 130 of FIG. 1. For example, the memory 313 may be a volatile memory unit or volatile memory units. For example, the memory 313 may be a non-volatile memory unit or non-volatile memory units. For example, the memory 313 may be another type of computer readable medium, such as a magnetic or optical disk. For example, the memory 313 may store data obtained based on an operation performed by the processor 311 (e.g., an algorithm execution operation). According to an embodiment, the memory 313 may be configured in a form integrated with the processor 311.

According to an embodiment, the electronic device 101 may include the communication circuit 314. The communication circuit 314 may correspond to at least a portion of the communication module 190 of FIG. 1. For example, the communication circuit 314 may be used for various radio access technologies (RATs). For example, the communication circuits 314 may be used to perform Bluetooth communication, wireless local area network (WLAN) communication, Zigbee communication, near field communication (NFC), ultra wide band (UWB) communication, UWB communication, or ANT+ communication. For example, the communication circuit 314 may be used to perform cellular communication. For example, the processor 311 may establish a connection with another electronic device (e.g., the wearable device 200) through the communication circuit 314. For example, using the communication circuit 314, the processor 311 may identify (or measure) a location of the electronic device 101 based on a received or transmitted wireless signal (e.g., a global positioning system (GPS) signal). According to an embodiment, the communication circuit 314 may be configured to be integrated with the processor 311.

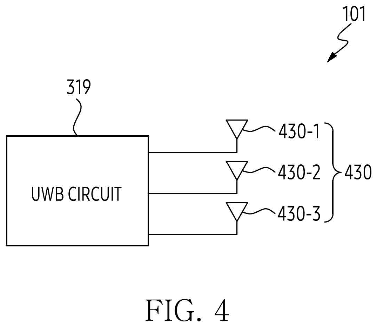

For example, the communication circuit 314 may include a UWB circuit 319. The UWB circuit 319 may be used to receive a UWB signal emitted from the electronic device 101 or to emit a UWB signal to the electronic device 101. The UWB circuit 319 may be used to identify a distance between the wearable device 200 and the electronic device 101. A specific example of the UWB circuit 319 will be described later in FIG. 4.

For example, the communication circuit 314 may include an NFC circuit. For example, the NFC circuit may be referred to as an antenna for NFC. For example, the NFC circuit may be configured in a loop form. A processor 311 may provide power to the NFC circuit. As power is provided to the NFC circuit, current may circulate in a loop form within a loop formed by the NFC circuit. Based on the circulated current, an NFC signal may be emitted.

Although not illustrated, the electronic device 101 may further include at least one of a camera, a fingerprint sensor, and/or a microphone.

For example, the camera may be used to identify light emitted from the wearable device 200. The processor 311 may identify whether the wearable device 200 is located on the display 312 by identifying light emitted from the wearable device 200 using the camera. The camera may correspond to the camera module 180 of FIG. 1.

For example, the fingerprint sensor may include an optical fingerprint sensor or an ultrasonic fingerprint sensor. The processor 311 may identify whether the wearable device 200 is located on the display 312 by identifying light emitted from the wearable device 200 using the optical fingerprint sensor. The processor 311 may identify whether the wearable device 200 is located on the display 312 using the ultrasonic fingerprint sensor.

For example, the processor 311 may identify whether the wearable device 200 is located on the display 312 using the microphone. As an example, the processor 311 may identify whether the wearable device 200 is located on the display 312 by identifying a sound of the wearable device 200 being placed on the display 312 using the microphone. As an example, the processor 311 may identify whether the wearable device 200 is located on the display 312 by identifying a sound outputted from the wearable device 200 using at least one microphone.

According to an embodiment, the wearable device 200 may include the processor 321, a sensor 322, memory 323, and/or a communication circuit 324. According to an embodiment, the wearable device 200 may include at least one of the processor 321, the sensor 322, the memory 323, and the communication circuit 324. For example, at least a portion of the processor 321, the sensor 322, the memory 323, and the communication circuit 324 may be omitted according to an embodiment.

According to an embodiment, the wearable device 200 may include the processor 321. For example, the processor 321 may correspond to the processor 120 of FIG. 1. The processor 321 may be operatively (or operably) coupled with or connected with the sensor 322, the memory 323, and the communication circuit 324. The processor 321 being operatively coupled with or connected with the sensor 322, the memory 323, and the communication circuit 324 may mean that the processor 321 may control the sensor 322, the memory 323, and the communication circuit 324. For example, the sensor 322, the memory 323, and the communication circuit 324 may be controlled by the processor 321.

According to an embodiment, the processor 321 may be configured with at least one processor. For example, the processor 321 may be configured with a main processor that performs high-performance processing and an auxiliary processor that performs low-power processing. At least a portion of the sensor 322 may be connected to the auxiliary processor. The at least a portion of the sensor connected to the auxiliary processor may obtain data on a user for 24 hours. According to an embodiment, one of the main processor and the auxiliary processor may be activated according to a state and/or an operation of the wearable device 200. As an example, in a state that a battery of the wearable device 200 is insufficient, the auxiliary processor may be activated. As an example, in a state that accurate data on the user is required, the main processor may be activated.

According to an embodiment, the processor 321 may determine an operation time point of the sensor 322. The processor 321 may control an operation of the sensor 322. The processor 321 may process information obtained from the sensor 322.

According to an embodiment, the wearable device 200 may include the sensor 322. The sensor 322 may be used to obtain various information. For example, sensor 322 may be used to obtain information on the user. The information on the user may include data on a body of the user.

As an example, the sensor 322 may be used to obtain body temperature data (or body temperature information), heart rate data (or heart rate information), and/or motion data (or motion information) of the user. For example, the sensor 322 may be configured with at least one sensor. The sensor 322 may include at least one sensor. For example, the sensor 322 may correspond to the sensor module 176 of FIG. 1.

For example, the sensor 322 may include an acceleration sensor 325. The acceleration sensor 325 may be used to identify a change in acceleration of the wearable device 200. As an example, the acceleration sensor 325 may identify (or measure or detect) acceleration of the wearable device 200 in three directions of an x-axis, a y-axis, and a z-axis.

For example, the sensor 322 may include a gyro sensor 326. The gyro sensor 326 may identify (or measure or detect) an angular velocity of the wearable device 200 in three directions of an x-axis, a y-axis, and a z-axis. According to an embodiment, the wearable device 200 may include an inertial sensor including the acceleration sensor 325 and the gyro sensor 326.

For example, the sensor 322 may include a photoplethysmography (PPG) sensor 327. The PPG sensor 327 may be used to measure a pulse (or a change in an amount of blood in a blood vessel) by identifying a change in an amount of received light according to a change in blood vessel volume. The PPG sensor 327 may include one or more photodiodes (PDs) and one or more light emitting diodes (LEDs). For example, the PPG sensor 327 may be used to identify a change in a blood flow amount in a blood vessel during a heartbeat. The PPG sensor 327 may identify a change in a blood flow amount in a blood vessel during a heartbeat in a state that an optical sensor is in contact with skin on a peripheral blood vessel. Based on a PPG signal and a waveform, the processor 321 may identify a blood flow amount and identify a change in the blood flow amount.

For example, the PPG sensor 327 may include a transmissive PPG sensor and/or a reflective PPG sensor.

As an example, the PPG sensor 327 may output light toward skin of the user through one of an LED (e.g., green, red, or infrared (IR), a laser, and a vertical cavity surface emitting laser (VCSEL)). The PPG sensor 327 may identify light reflected by and/or transmitted through skin of the user through at least one of a PD and/or a complementary metal oxide semiconductor (CMOS) camera. The PPG sensor 327 may store a value identified through an analog to digital converter (ADC) in memory 313 (or a buffer) based on the reflected and/or transmitted light.

As an example, the transmissive PPG sensor may identify light that has transmitted through a blood vessel through the PD disposed in an opposite side of the LED. The transmissive PPG sensor may identify a blood flow amount of the user based on intensity of the light that has been transmitted through a blood vessel. As an example, the reflective PPG sensor may output light toward skin of the user through an LED. The reflective PPG sensor may identify at least partially received light reflected by a blood vessel through a PD disposed on substantially the same surface as the LED. The reflective PPG sensor may identify a blood flow amount of the user based on intensity of the light reflected by a blood vessel. For example, a multi-light source may be used as an LED. For example, green light, which is a complementary color to blood, may be used as the LED.

According to an embodiment, the wearable device 200 may include the memory 323. For example, the memory 323 may correspond to the memory 130 of FIG. 1. For example, the memory 323 may correspond to the memory 130 of the electronic device 101.

According to an embodiment, the wearable device 200 may include the communication circuit 324. For example, the communication circuit 324 may correspond to at least a portion of the communication module 190 of FIG. 1. For example, the communication circuit 324 may correspond to the communication circuit 314 of the electronic device 101.

For example, the communication circuit 324 may include an NFC circuit and/or a UWB circuit. As an example, the UWB circuit may correspond to the UWB circuit 319 of the electronic device 101. As an example, the NFC circuit may correspond to the NFC circuit of the electronic device 101.

According to an embodiment, the wearable device 200 may further include various components in addition to the components illustrated in FIG. 3. An example of disposition of the components included in the wearable device 200 will be described later in FIG. 5.

FIG. 4 illustrates an example of a UWB circuit and a plurality of antennas.

Referring to FIG. 4, an electronic device 101 may include a UWB circuit 319 and a plurality of antennas 430 connected with the UWB circuit 319. The plurality of antennas 430 may include a first antenna 430-1, a second antenna 430-2, and a third antenna 430-3. For example, the plurality of antennas 430 may be used to transmit a UWB signal. The plurality of antennas 430 may be used to receive a UWB signal.

According to an embodiment, the plurality of antennas 430 may be formed as a directional antenna. For example, the plurality of antennas 430 may include a patch antenna. The plurality of antennas 430 may be used to identify a location of an external device (e.g., a wearable device 200) with respect to the electronic device 101.

According to an embodiment, the first antenna 430-1 may be used for transmission and reception of a UWB signal. The second antenna 430-2 and the third antenna 430-3 may be used for reception of a UWB signal.

According to an embodiment, the first antenna 430-1, the second antenna 430-2, and the third antenna 430-3 may be disposed in the electronic device 101 in an L-shaped form to support a vertical mode (or a portrait mode) or a horizontal mode (or a landscape mode) of the electronic device 101.

For example, in a case that the electronic device 101 operates in the vertical mode, a processor 311 may identify information on a location of an external device (e.g., the wearable device 200) with respect to the electronic device 101 through the first antenna 430-1 and the second antenna 430-2. The processor 311 may identify information on a location of an external device (e.g., the wearable device 200) based on a difference between a phase of a UWB signal received through the first antenna 430-1 and a phase of a UWB signal received through the second antenna 430-2.

For example, in a case that the electronic device 101 operates in the horizontal mode, the processor 311 may identify information on a location of an external device (e.g., the wearable device 200) with respect to the electronic device 101 through the first antenna 430-1 and the third antenna 430-3. The processor 311 may identify information on a location of an external device (e.g., the wearable device 200) based on a difference between a phase of a UWB signal received through the first antenna 430-1 and a phase of a UWB signal received through the third antenna 430-3.

According to an embodiment, the processor 311 may identify that a location of the wearable device 200 is within an identifiable distance through UWB communication. The processor 311 may identify that a location of the wearable device 200 is within an identifiable distance based on at least one of a received signal strength indicator (RSSI) or a reference signal received power (RSRP). According to an embodiment, the processor 311 may identify a location of the wearable device 200 with respect to the electronic device 101 by using the plurality of antennas 430. For example, in a case that a distance between the electronic device 101 and the wearable device 200 is greater than or equal to a designated distance, the processor 311 may more accurately identify a location of the wearable device 200. The processor 311 may identify a location of the wearable device 200 based on the distance between the electronic device 101 and the wearable device 200 being greater than or equal to the designated distance. According to an embodiment, the UWB circuit 319 may identify a location of the wearable device 200 by using not only the plurality of antennas 430 but also various forms and/or various numbers of antennas.

FIG. 5 illustrates an example of a partial cross-sectional view of a wearable device.

Referring to FIG. 5, a wearable device 200 may correspond to the wearable device 200 of FIG. 2. According to an embodiment, the wearable device 200 may be formed in various forms of shape (e.g., a ring, a quadrangle, or a polygon) that is wearable on a finger of a user. For example, a housing 210 of the wearable device 200 may be formed in a ring shape that may be worn on a finger of the user. In FIG. 5, the ring-shaped wearable device 200 having a smooth surface is illustrated as an example, but is not limited thereto. For example, the wearable device 200 may be implemented as a housing including a plurality of planes. For example, the ring-shaped wearable device 200 having a non-smooth surface may also be understood as an embodiment of the present disclosure.

According to an embodiment, in a state of being worn by the user, the ring-shaped housing 210 may include a first surface 211 in contact with a body of the user, a second surface 212 exposed to the outside, and a side surface between the first surface 211 and the second surface 212. For example, a space for including (or disposing) at least one component may be included between the first surface 211 and the second surface 212.

According to an embodiment, a PCB 351 may be disposed between the first surface 211 and the second surface 212 of the wearable device 200. For example, a processor 321, an acceleration sensor 325, a gyro sensor 326, a PPG sensor 327, a temperature sensor 334, memory 323, and/or a PMIC 354 may be disposed on the PCB 351. For example, the PCB 351 may be configured with a rigid area and a flexible area. As an example, the rigid area may be referred to as a rigid flexible printed circuit board (RFPCB). As an example, the flexible area may be referred to as a flexible printed circuit board (FPCB).

For example, the PPG sensor 327 may include one or more light emitting circuits 327-1, one or more light receiving circuits 327-2, and a control circuit 327-3. As an example, the one or more light emitting circuits 327-1 and the one or more light receiving circuits 327-2 may be disposed toward the first surface 211. As an example, the control circuit 327-3 may be disposed toward the second surface 212.

For example, the PMIC 354 may be used to manage power of the wearable device 200. The PMIC 354 may be used to provide (or distribute) power to components requiring power in the wearable device 200. Through a charging interface 353, the PMIC 354 may support a wired charging method (e.g., a terminal or a pogo pin) for charging the wearable device 200 or a wireless charging method (e.g., wireless power consortium (WPC) or NFC).

According to an embodiment, a battery 352 may be disposed between the first surface 211 and the second surface 212 of the wearable device 200. The battery 352 may be configured with at least one battery (or a battery pack). For example, the battery 352 may be configured such that at least one battery is connected in series and/or in parallel. For example, the battery 352 may be configured with a flexible battery pack. For example, the battery 352 may be charged and/or discharged as a secondary battery. For example, a material constituting the battery 352 may be variously configured. As an example, the material constituting the battery 352 may include at least one of lithium ion and mercury.

According to an embodiment, an antenna 355 may be disposed between the first surface 211 and the second surface 212 of the wearable device 200. For example, the antenna 355 may be configured with a single antenna and/or a plurality of segment antennas. According to an embodiment, the antenna 355 may be configured as a portion of the housing 210 of the wearable device 200. For example, the antenna 355 may be electrically connected with a communication circuit 324 through the PCB 351.

Although not illustrated, the wearable device 200 may further include various components in addition to the illustrated components. For example, the wearable device 200 may include a display. The display may be disposed on an outer surface of the housing 210.

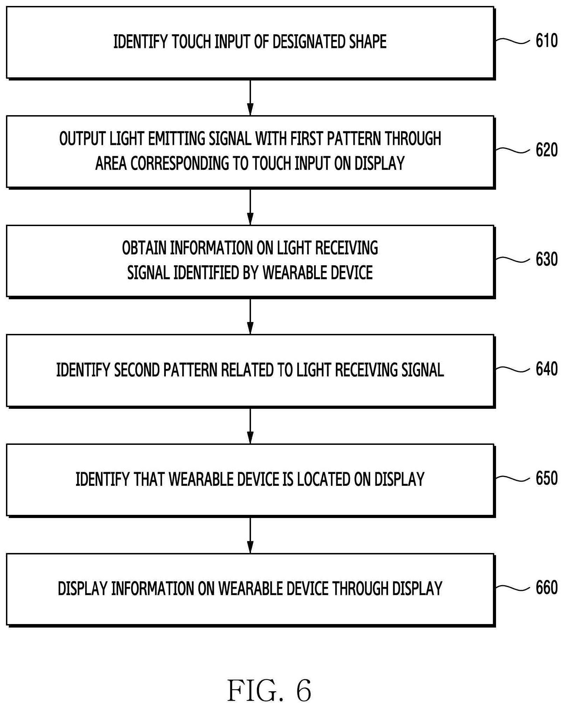

FIG. 6 illustrates a flowchart of an operation of an electronic device. In the following embodiment, each of operations may also be performed sequentially, but is not necessarily performed sequentially. For example, an order of each of the operations may also be changed, and at least two operations may also be performed in parallel.

Referring to FIG. 6, in operation 610, a processor 311 may identify a touch input of a designated shape. For example, the processor 311 may identify a touch input of a designated shape corresponding to a shape of a wearable device 200. As an example, in a case that the wearable device 200 has a ring shape, the processor 311 may identify a circular touch input. As an example, in a case that the wearable device 200 has a triangular shape, the processor 311 may identify a touch input of a triangle.

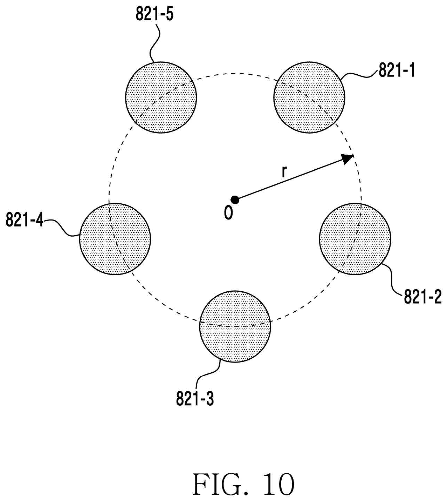

For example, the processor 311 may identify at least one touch point by using at least one of an electromagnetic inductive circuit 315 and/or a touch screen panel 316. The processor 311 may identify that a shape formed along the at least one touch point corresponds to a designated shape. The processor 311 may identify a touch input of the designated shape based on identifying that the shape formed along the at least one touch point corresponds to the designated shape. A specific operation of the processor 311 for identifying a touch input of a designated shape will be described later in FIG. 10.

In operation 620, the processor 311 may output a light emitting signal with a first pattern through an area corresponding to a touch input on a display 312. For example, in response to the touch input, the processor 311 may output a light emitting signal with a first pattern through the area corresponding to a touch input on the display 312.

For example, the processor 311 may identify an area corresponding to a touch input on the display 312. The processor 311 may identify an area corresponding to a designated shape. The area may include the designated shape.

For example, the processor 311 may output a light emitting signal with a first pattern. The processor 311 may configure the first pattern based on at least one of brightness, a color, and/or an emission period of light outputted from the area. For example, the processor 311 may set brightness of light outputted through the display 312 based on a pulse width modulation (PWM) method. The processor 311 may configure the first pattern based on changing the brightness of light. For example, the processor 311 may configure the first pattern based on changing a time (or a period) at which a visual object is displayed on the area. For example, a light emitting signal with the first pattern may be outputted based on graphic information being displayed. For example, the first pattern may be configured based on a combination of various colors including a red color, a green color, or a blue color. For example, the first pattern may be configured based on a single color.

According to an embodiment, the processor 311 may be connected with at least one wearable device. The processor 311 may identify that one of the at least one wearable device is located on the display 312 based on the touch input of the designated shape. The processor 311 may not identify which of the at least one wearable device is located on the display 312 only by a touch input. Accordingly, the processor 311 may output a light emitting signal with a first pattern through the area corresponding to a touch input.

For example, the processor 311 may display a visual effect indicating that one of the at least one wearable device is located on the display 312. The processor 311 may display a visual effect indicating that one of the at least one wearable device is located on the display 312 together with the light emission signal with a first pattern. According to an embodiment, the visual effect indicating that one of the at least one wearable device is located on the display 312 may be used as a light emitting signal with a first pattern.

According to an embodiment, the processor 311 may transmit a signal causing at least one wearable device connected with an electronic device 101 to identify a light emitting signal to the at least one wearable device. The processor 311 may transmit a signal causing sensing the light emitting signal to the at least one wearable device. For example, in response to the touch input, the processor 311 may transmit a signal causing at least one wearable device to identify the light emitting signal to the at least one wearable device. For example, the at least one wearable device may operate in a mode for identifying a light emitting signal based on the received signal. Among the at least one wearable device, the wearable device 200 located on the display 312 may identify a light receiving signal using a light receiving circuit based on the light emitting signal of the wearable device 200.

According to an embodiment, the processor 311 may identify that the wearable device 200 is located within a designated distance from the electronic device 101 based on the touch input. The processor 311 may identify that the wearable device 200 is not worn by a user based on the touch input. The processor 311 may transmit a signal causing the wearable device 200 to identify the light emitting signal to the wearable device 200 based on identifying that the wearable device 200 is located within the designated distance from the electronic device 101 and the wearable device 200 is not worn by the user.

In operation 630, the processor 311 may obtain information on the light receiving signal identified by the wearable device 200. After outputting the light emitting signal, the processor 311 may obtain information on the light receiving signal identified by the wearable device 200 using a communication circuit 314. The processor 311 may obtain information on the light receiving signal identified by the wearable device 200 using the communication circuit 314 based on outputting the light emitting signal.

For example, the processor 311 may receive information on the light receiving signal identified by the wearable device 200 from the wearable device 200 using the communication circuit 314. According to an embodiment, the processor 311 may also obtain information on the light receiving signal identified by the wearable device 200 from an external electronic device. For example, in a state that the electronic device 101 is not connected with the wearable device 200 and an external electronic device is connected with the wearable device 200, the processor 311 may receive information on the light receiving signal identified by the wearable device 200 from the external electronic device.

In operation 640, the processor 311 may identify a second pattern related to the light receiving signal. For example, the processor 311 may identify a second pattern related to the light receiving signal based on the information on the light receiving signal. For example, the processor 311 may identify that the light receiving signal identified by the wearable device 200 has a second pattern based on the light emitting signal with the first pattern.

According to an embodiment, the information on the light receiving signal may indicate the second pattern related to the light receiving signal. According to an embodiment, the information on the light receiving signal may further include an identifier (ID) of the wearable device 200.

In operation 650, the processor 311 may identify that the wearable device 200 is located on the display 312. For example, the processor 311 may identify that the wearable device 200 is located on the display 312 based on the second pattern corresponding to the first pattern.

According to an embodiment, the processor 311 may identify that the second pattern corresponds to the first pattern. The processor 311 may identify whether the second pattern related to the light receiving signal identified by the wearable device 200 corresponds to the first pattern related to the light emitting signal. The processor 311 may identify that the wearable device 200 is located on the display 312 based on identifying that the second pattern corresponds to the first pattern. The processor 311 may identify that the wearable device 200 among the at least one wearable device is located on the display 312. For example, based on identifying that the second pattern corresponds to the first pattern, the processor 311 may identify that the wearable device 200 is located on an area in which an optical signal (e.g., the light emitting signal of the first pattern) is outputted from the display 312. For example, based on identifying that the second pattern corresponds to the first pattern, the processor 311 may identify that the wearable device 200 is located on an area corresponding to a touch input in the display 312.

In operation 660, the processor 311 may display information on the wearable device 200 through the display 312. For example, the processor 311 may display information on the wearable device 200 through the display 312 based on identifying that the wearable device 200 is located on the display 312.

According to an embodiment, the processor 311 may receive information on the wearable device 200 from the wearable device 200 based on identifying that the wearable device 200 is located on the display 312. The processor 311 may display a user interface for providing information on the wearable device 200 through the display 312. The processor 311 may display a user interface for providing information on the wearable device 200 through the display 312 while the wearable device 200 is located on the display 312. The processor 311 may cease displaying the user interface based on identifying that the wearable device 200 is spaced apart from the display 312.

In the following specification, a technical feature in which information on the wearable device 200 is displayed through the display 312 of the electronic device 101 will be described based on the wearable device 200 being located in the display 312 of the electronic device 101. An operation of the electronic device 101 described below may be performed by the processor 311 of the electronic device 101. An operation of the wearable device 200 may be performed by the processor 321 of the wearable device 200. Hereinafter, for convenience of description, operations performed by the processor 311 of the electronic device 101 will be described as being performed by the electronic device 101, and operations performed by the processor 321 of the wearable device 200 will be described as being performed by the wearable device 200.

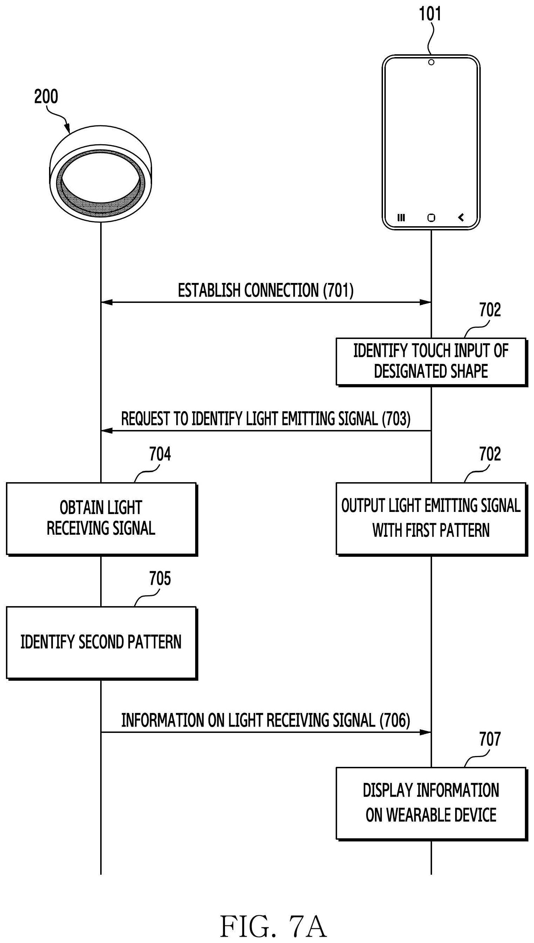

FIG. 7A illustrates an example of an operation of an electronic device and a wearable device.

Referring to FIG. 7A, in operation 701, an electronic device 101 and a wearable device 200 may establish a connection. For example, the electronic device 101 and the wearable device 200 may establish a connection using at least one of various radio access technologies (e.g., Bluetooth communication and wireless LAN (WLAN)). The electronic device 101 may receive information on the wearable device 200 from the wearable device 200 based on the connection. The electronic device 101 may transmit information on the electronic device 101 to the wearable device 200 based on the connection. The electronic device 101 may control the wearable device 200 based on the connection. The electronic device 101 may be controlled from the wearable device 200 based on the connection.

In operation 702, the electronic device 101 may identify a touch input of a designated shape. The operation 702 may correspond to the operation 601 of FIG. 6.

In operation 703, the electronic device 101 may request the wearable device 200 to identify a light emitting signal. The electronic device 101 may transmit a signal causing the wearable device 200 to identify a light emitting signal to the wearable device 200. The wearable device 200 may identify a light emitting signal outputted through an area corresponding to a touch input of a display 312 of the electronic device 101. For example, the light emitting signal may be outputted based on a first pattern.

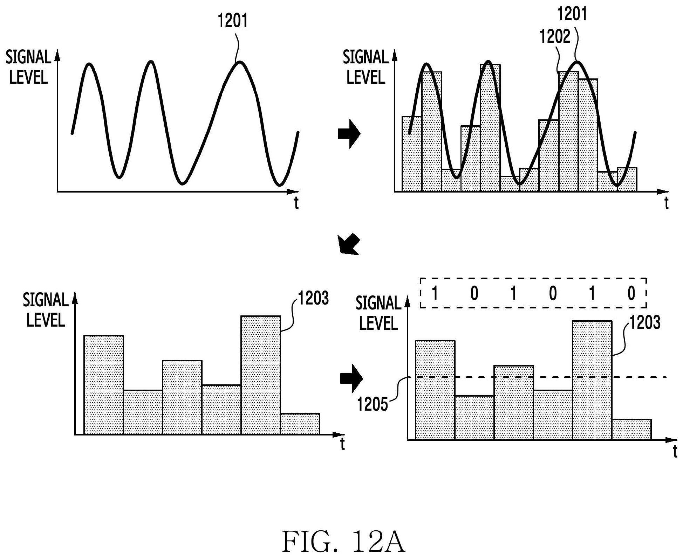

In operation 704, the wearable device 200 may obtain a light receiving signal. The wearable device 200 may obtain a light receiving signal by using a light receiving circuit (e.g., one or more light receiving circuits 327-2 of FIG. 5) of the wearable device 200 based on the light emitting signal. For example, the wearable device 200 may identify external light based on a sensing frequency (or a designated period) using the light receiving circuit. As an example, the wearable device 200 may identify external light 60 times per second (i.e., 60 Hz) using the light receiving circuit. As an example, the wearable device 200 may obtain data of 2^60 bits per second. As the sensing frequency increases, the wearable device 200 may obtain more data for the same time. According to an embodiment, in a case that 2^10 bits of data are transmitted from the electronic device 101, the wearable device 200 may also identify 6 samples as one bit. According to an embodiment, the wearable device 200 may set a time for identifying transmitted data. For example, the wearable device 200 may also obtain data for 16.6 [ms]. As in the above-described example, the wearable device 200 may dynamically change sensing accuracy and/or a sensing time. A specific operation of the wearable device 200 identifying a digital signal based on the light emitting signal (or the light receiving signal) will be described later in FIGS. 12A to 12C.

In operation 705, the wearable device 200 may identify a second pattern related to the light receiving signal. The operation 705 may correspond to the operation 640 of FIG. 6.

In operation 706, the wearable device 200 may transmit information on the light receiving signal to the electronic device 101. The electronic device 101 may receive the information on the light receiving signal from the wearable device 200. For example, the information on the light receiving signal may indicate a second pattern related to the light receiving signal. The information on the light receiving signal may include information on an identifier of the wearable device 200.

According to an embodiment, the electronic device 101 may identify that the second pattern corresponds to the first pattern based on the information on the light receiving signal. The electronic device 101 may identify that the second pattern of the light receiving signal identified by the wearable device 200 corresponds to the first pattern of the light emitting signal outputted from the electronic device 101. The electronic device 101 may identify that the wearable device 200 is located on the display 312 based on identifying that the second pattern corresponds to the first pattern.

In operation 707, a processor 311 may display information on the wearable device 200 through the display 312. For example, the information on the wearable device 200 may include information on a body of a user identified by the wearable device 200, information on remaining battery level of the wearable device 200, information on an account of the wearable device 200, and/or information on a function (e.g., payment, money transfer, file transmission, or contact exchange) that may be performed by the wearable device 200.

At least a portion of the above-described operation 701 to operation 707 may be omitted (or changed) according to an embodiment. According to an embodiment, the electronic device 101 may not request the wearable device 200 to identify a light emitting signal. The electronic device 101 may output a light emitting signal with a first pattern in response to identifying the touch input of the designated shape. The wearable device 200 may obtain a light receiving signal based on the light emitting signal. Even when the wearable device 200 does not receive the request for identifying the light emitting signal from the electronic device 101, the wearable device 200 may obtain a light receiving signal using a PPG sensor 327 operating based on a designated period. The wearable device 200 may transmit information indicating that the light receiving signal has been received to the electronic device 101. The electronic device 101 may display information on the wearable device 200 based on the received information.

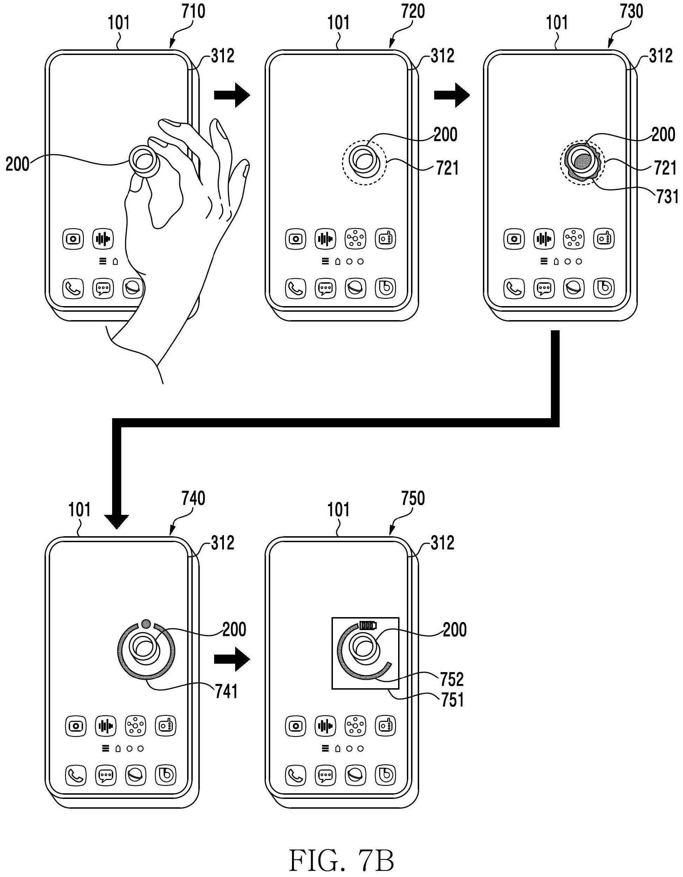

FIG. 7B illustrates an example of an operation of an electronic device according to contact of a wearable device.

Referring to FIG. 7B, various screens may be displayed based on the wearable device 200 being located on the display 312 of the electronic device 101.

In a state 710, the wearable device 200 may be located on the display 312 of the electronic device 101. For example, the user of the wearable device 200 may locate the wearable device 200 on a display of the electronic device 101.

In a state 720, the electronic device 101 may identify a touch input of a designated shape. The processor 311 may identify at least one touch point. Based on identifying that the at least one touch point configures a designated shape, the processor 311 may identify a touch input of the designated shape. For example, the electronic device 101 may identify that the at least one touch point configures a circle. The processor 311 may identify a circular touch input.

According to an embodiment, the electronic device 101 may identify an area 721 corresponding to a touch input. For example, in a case that the touch input is identified as the wearable device 200 being in contact with the display 312, the area 721 may correspond to a shape (or a cross section) of the wearable device 200. The area 721 may correspond to an area in which the wearable device 200 is in contact with the display 312. According to an embodiment, the area 721 may include an area in which the wearable device 200 is in contact with the display 312.

In a state 730, the electronic device 101 may output a light emitting signal 731 comprising a first pattern in the area 721. For example, the light emitting signal 731 may be outputted based on the first pattern. The wearable device 200 may identify the light emitting signal 731 outputted from the area 721 and having the first pattern. The wearable device 200 may identify a light receiving signal by using one or more light receiving circuits 327-2 based on the light emitting signal 731. The wearable device 200 may identify that the light receiving signal has a second pattern.

In a state 740, the electronic device 101 may display a visual effect 741 after outputting the light emitting signal 731, until displaying a user interface 751 for providing information on the wearable device 200. The visual effect 741 may indicate that one of at least one wearable device is located on the display 312. The visual effect 741 may indicate that the wearable device 200 is being recognized. The visual effect 741 may indicate that information on the wearable device 200 is being received.

In a state 750, the electronic device 101 may obtain information on the wearable device 200. The electronic device 101 may receive information on the wearable device 200 from the wearable device 200 based on identifying that the wearable device 200 is located on the display 312. The electronic device 101 may display the user interface 751 for providing information on the wearable device 200 through the display 312.

For example, the user interface 751 may be configured to provide information on remaining battery level of the wearable device 200. As an example, the user interface 751 may include an indicator 752 indicating the remaining battery level of the wearable device 200. As an example, the indicator 725 indicating the remaining battery level may be displayed within the user interface 751 displayed on an area in which the wearable device 200 is located. The indicator 725 may be configured in a shape identical to or similar to a shape (e.g., a circle) of the wearable device 200.

Although not illustrated in FIG. 7B, the user interface 751 may be variously configured. For example, the user interface 751 may be configured to provide information on the user obtained from the wearable device 200. For example, the user interface 751 may include an area in which the wearable device 200 is in contact with the display 312. Although not illustrated, the user interface 751 may also include a visual object indicating an area in which the wearable device 200 is in contact with the display 312.

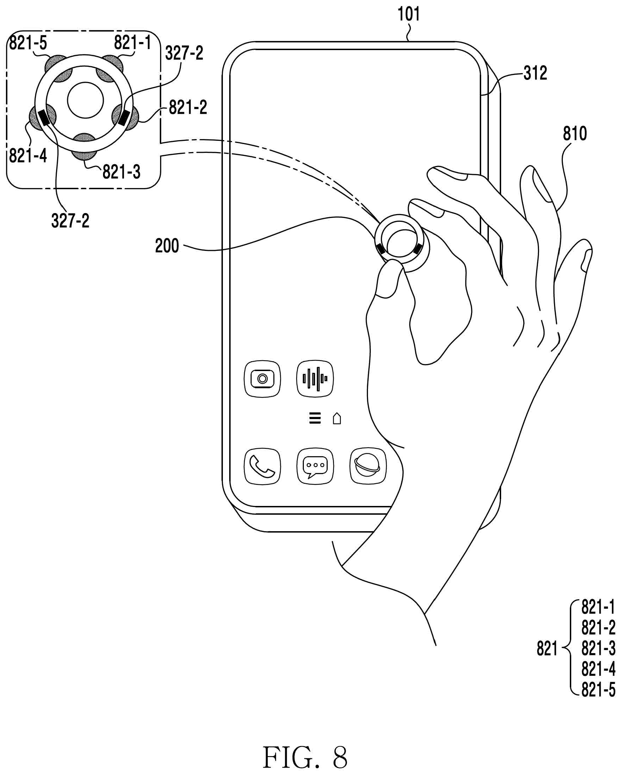

FIG. 8 illustrates an example of an operation of identifying a touch input of a designated shape in an electronic device.

Referring to FIG. 8, an electronic device 101 may identify a touch input of a designated shape. For example, the electronic device 101 may identify at least one touch point 821. The at least one touch point 821 may include a touch point 821-1 to a touch point 821-5. The electronic device 101 may identify that the at least one touch point 821 configures a designated shape (e.g., a circle). Based on identifying that the at least one touch point 821 configures a designated shape, a processor 311 may identify a touch input of the designated shape.

According to an embodiment, in a case that a part 810 of a body of a user is in contact with a wearable device 200, the at least one touch point 821 of the wearable device 200 may be more accurately identified by the electronic device 101. Accordingly, the electronic device 101 may provide an affordance for guiding the part 810 (e.g., a finger) of the body of the user to contact the wearable device 200 to identify the at least one touch point 821. For example, the electronic device 101 may provide a notification (e.g., a visual object) for guiding the part 810 (e.g., a finger) of the body of the user to contact the wearable device 200 to identify the at least one touch point 821.

According to an embodiment, the processor 311 may identify a location of the wearable device 200 on a display 312 based on identifying the at least one touch point 821.

According to an embodiment, the processor 311 may determine a center coordinate of the at least one touch point 821. The processor 311 may identify an area (e.g., the area 721 of FIG. 7B) corresponding to a touch input based on the determined center coordinate. For example, based on the area corresponding to a touch input and a size of the wearable device 200 connected with the electronic device 101, the processor 311 may determine an area in which a user interface for providing information on the wearable device 200 is to be displayed on the display 312 of the electronic device 101. The processor 311 may display a user interface within the determined area. For example, the size of the wearable device 200 may be changed according to an embodiment. Accordingly, the processor 311 may determine an area in which a user interface is to be displayed based on the size of the wearable device 200, and display the user interface for providing information on the wearable device 200 within the determined area. The user interface may be set differently according to the size of the wearable device.

According to an embodiment, the location of the wearable device 200 may be changed on the display 312 of the electronic device 101. The processor 311 may identify a change in the location of the wearable device 200 on the display 312 by identifying a change in the center coordinate of the at least one touch point 821. The processor 311 may identify an accurate location of the wearable device 200 on the display 312 based on the changed center coordinate. The processor 311 may remove an outlier of sensor values for a touch input based on identifying the changed center coordinate. The processor 311 may change a location of the user interface based on the change in the location of the wearable device 200 on the display 312.

According to an embodiment, the processor 311 may identify rotation of the wearable device 200 on the display 312. For example, the processor 311 may identify rotation of the wearable device 200 on the display 312 based on the change in the location of the at least one touch point 821. The processor 311 may change the user interface based on the rotation of the wearable device 200 on the display 312. As an example, the processor 311 may change a setting value (e.g., volume, or brightness) of the electronic device 101 and/or display (e.g., scroll or page change) of a screen of the display 312 based on the rotation of the wearable device 200.

According to an embodiment, the processor 311 may identify a change in a touch input by the wearable device 200 on the display 312. For example, the processor 311 may identify that the wearable device 200 on the display 312 is spaced apart from the display 312 for a designated time and contacts the display 312 again. The processor 311 may change the user interface based on identifying that the wearable device 200 on the display 312 is spaced apart from the display 312 for the designated time and contacts the display 312 again. For example, the processor 311 may identify that the wearable device 200 on the display 312 is spaced apart from the display 312 for the designated time and contacts the display 312 again based on magnitude of an electrical change for the at least one touch point 821. For example, the processor 311 may identify a designated operation (e.g., a click) for the electronic device 101 based on identifying that the wearable device 200 on the display 312 is spaced apart from the display 312 for the designated time and contacts the display 312 again.

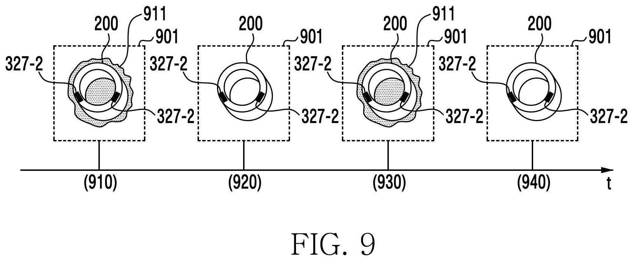

FIG. 9 illustrates an example of a light emitting signal with a first pattern.

Referring to FIG. 9, as a time point 910, a time point 920, a time point 930, and a time point 940 pass, an electronic device 101 may output a light emitting signal with a first pattern.

At the time point 910, based on a wearable device 200 identifying a touch input of a designated shape, the electronic device 101 may output a light emitting signal with a first pattern through an area 901 corresponding to the touch input.

For example, the electronic device 101 may display a visual object 911 through the area 901 at the time point 910. While the visual object 911 is displayed through the area 901, the wearable device 200 may identify a light receiving signal by using one or more light receiving circuits 327-2.

At the time point 920, the electronic device 101 may cease displaying the visual object 911. The electronic device 101 may not display the visual object 911. At the time point 930, the electronic device 101 may display the visual object 911. While the visual object 911 is displayed through the area 901, the wearable device 200 may identify a light receiving signal by using the one or more light receiving circuits 327-2. At the time point 940, the electronic device 101 may cease displaying the visual object 911.

As described above, the electronic device 101 may output a light emitting signal comprising a first pattern by displaying the visual object 911 based on a designated period. The electronic device 101 may output a light emitting signal comprising a first pattern based on changing a color and/or brightness of the area 901 of a display 312. For example, the electronic device 101 may identify a time section between the time point 910 and the time point 930 as a designated period. The electronic device 101 may output a light emitting signal with a first pattern based on the designated period.

According to an embodiment, the electronic device 101 may output a light emitting signal with a first pattern by providing various visual effects. For example, the electronic device 101 may display at least one of an object indicating loading, an object indicating scanning, or an object indicating a bubble effect. Based on providing the light emitting signal with a first pattern, the electronic device 101 may provide a user with an emotional visual effect without a sense of heterogeneity. For example, the electronic device 101 may sequentially display a phase of the moon in the area 901. As an example, the electronic device 101 may display a new moon at the time point 910. At the time point 920, the electronic device 101 may display a waxing moon. At the time point 930, the electronic device 101 may display a full moon. At the time point 940, the electronic device 101 may display a waning moon.

FIG. 10 illustrates an example of an operation of an electronic device for identifying at least one touch point.

Referring to FIG. 10, an electronic device 101 may identify a wearable device 200 by using at least one of an electromagnetic inductive circuit 315 and/or a touch screen panel 316. The wearable device 200 may be composed of a material (e.g., metal) capable of inducing electricity. The electronic device 101 may identify an electrical change based on the wearable device 200 being located on a display 312. The electronic device 101 may identify at least one touch point by identifying at least one point at which the electrical change has occurred.

For example, the electronic device 101 may identify at least one touch point 821. In a case that a designated shape is a circle, the electronic device 101 may identify the circle when the number of the at least one touch point 821 is two or more. The electronic device 101 may identify a plurality of estimated circles by using the at least one touch point 821. The electronic device 101 may identify one circle by overlapping the plurality of estimated circles. The electronic device 101 may identify that the circle is configured by using the at least one touch point 821. The electronic device 101 may identify a center O of the circle and identify a radius r of the circle based on the center O of the circle. The electronic device 101 may identify that the wearable device 200 has a ring shape based on the center O and the radius r of the circle.

According to an embodiment, the electronic device 101 may identify that the at least one touch point 821 is moved. The electronic device 101 may identify that the wearable device 200 is moved on the display 312 based on identifying that the at least one touch point 821 is moved. The electronic device 101 may change a location of a user interface for providing information on the wearable device 200 based on identifying that the wearable device 200 is moved on the display 312.

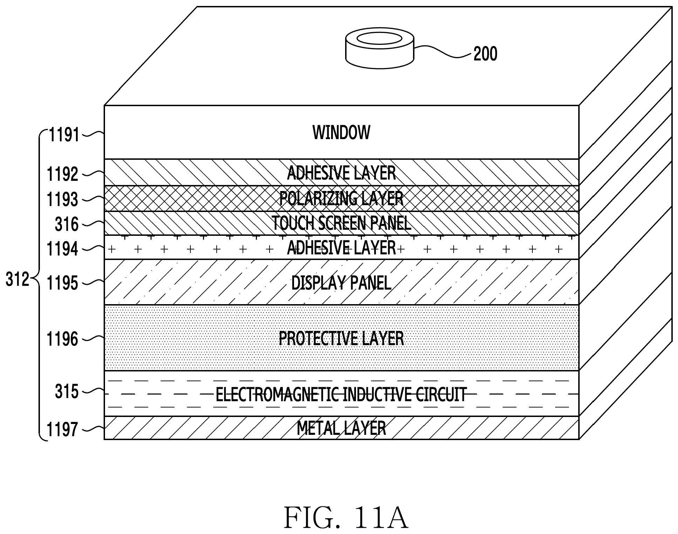

FIG. 11A illustrates an example of an operation of an electronic device for identifying that a wearable device is located on a display.

Referring to FIG. 11A, a display 312 may be configured based on a plurality of layers. According to an embodiment, the display 312 may include a window 1191, an adhesive layer 1192, a polarizing layer 1193, a touch screen panel 316, an adhesive layer 1194, a display panel 1195, a protective layer 1196, an electromagnetic inductive circuit 315, and a metal layer 1197. The plurality of layers included in the display 312 illustrated in FIG. 11A are not limited to an embodiment. According to an embodiment, the plurality of layers may further include an additional layer or may not include a portion of the plurality of layers. According to an embodiment, a portion of the plurality of layers may be combined with other layers. A stacking order and structure of the plurality of layers of the display 312 may be changed according to an embodiment.

For example, the window 1191 may be disposed on a surface of the display panel 1195. The window 1191 may be disposed to protect the display panel 1195 and to transmit light emitted from the display panel 1195 to the outside. For example, the adhesive layer 1192 or 1194 may include an optically clear adhesive (OCA). For example, the polarizing layer 1193 may be disposed to pass light vibrating along a designated linear trajectory. For example, the protective layer 1196 may be disposed to protect the display 312 by absorbing an external impact. The protective layer 1196 may include a light blocking layer (e.g., an embo layer) and a cushion layer. The metal layer 1197 may be disposed to prevent interference due to an external electrical signal.

According to an embodiment, an electronic device 101 may emit a magnetic field by using a coil included in a wearable device 200. The electronic device 101 may identify the magnetic field emitted from the wearable device 200 using the electromagnetic inductive circuit 315. The electronic device 101 may identify that the wearable device 200 is located on the display 312 based on the identified magnetic field. The electronic device 101 may identify an area in which the wearable device 200 is located on the display 312.

According to an embodiment, the wearable device 200 may be located on the display 312 of the electronic device 101. The wearable device 200 may include a component capable of inducing an electrical change (or a change in capacitance) of the touch screen panel 316. Based on the wearable device 200 being located on the display 312 of the electronic device 101, an electrical change of the touch screen panel 316 may occur. The electronic device 101 may identify that the wearable device 200 is located on the display 312 based on the electrical change of the touch screen panel 316. The electronic device 101 may identify an area in which the wearable device 200 is located on the display 312.

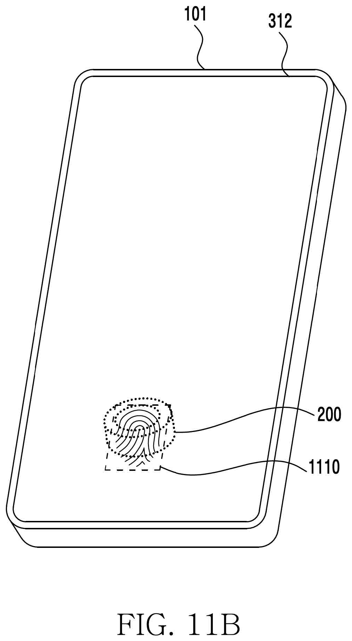

FIG. 11B illustrates an example of an operation of an electronic device for identifying that a wearable device is located on a display.

Referring to FIG. 11B, in the above-described embodiment, an example in which the electronic device 101 outputs a light emitting signal of a first pattern through the display 312 and the wearable device 200 identifies a light receiving signal of a second pattern has been described, but in FIG. 11B, the wearable device 200 may output a light emitting signal of a first pattern and the electronic device 101 may identify a light receiving signal of a second pattern.

According to an embodiment, the electronic device 101 may transmit a signal causing the wearable device 200 to output a light emitting signal of a first pattern to the wearable device 200 based on identifying a touch input of a designated shape. The wearable device 200 may output a light emitting signal of a first pattern by using a light emitting circuit 327-1 based on the received signal. The electronic device 101 may identify that the wearable device 200 is located on the display 312 by using at least one of a camera, a proximity sensor, and/or an optical fingerprint sensor based on the light emitting signal.

For example, the wearable device 200 may be located in an area 1110 corresponding to a location in which the at least one of a camera, a proximity sensor, and/or an optical fingerprint sensor is disposed. The area 1110 may include an area in which the light emitting signal outputted from the wearable device 200 is identified by using the at least one of a camera, a proximity sensor, and/or an optical fingerprint sensor. The electronic device 101 may identify the light emitting signal of the first pattern outputted from the wearable device 200 by using the at least one of a camera, a proximity sensor, and/or an optical fingerprint sensor. The electronic device 101 may identify that the wearable device 200 is located in the area 1110 on the display 312 based on identifying that the second pattern of the light receiving signal corresponds to the first pattern.

FIG. 12A illustrates an example of an operation of a wearable device for identifying a second pattern of a light receiving signal.

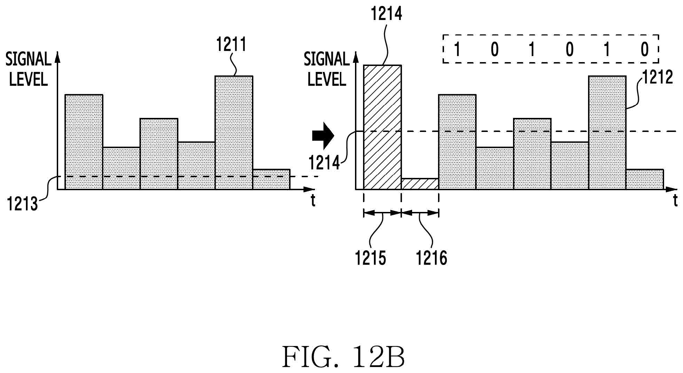

FIG. 12B illustrates an example of an operation of a wearable device for identifying a second pattern of a light receiving signal.

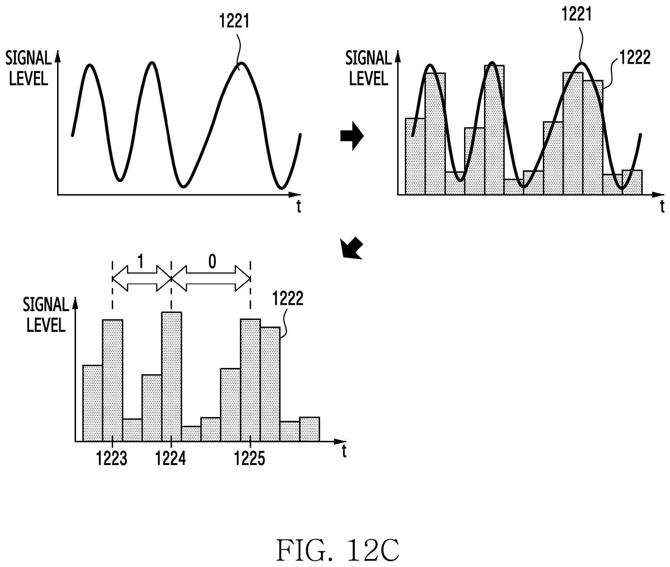

FIG. 12C illustrates an example of an operation of a wearable device for identifying a second pattern of a light receiving signal.

Referring to FIG. 12A, a wearable device 200 may obtain a light receiving signal 1201 by using one or more light receiving circuits 327-2 based on a light emitting signal outputted through a display 312 of an electronic device 101. The light receiving signal 1201 may be referred to as a PPG analog signal. The light receiving signal 1201 identified by the wearable device 200 may include a change in brightness of the display 312 and/or noise caused by external light (e.g., sunlight). Accordingly, the wearable device 200 may identify a second pattern based on performing a sampling operation and/or a quantization operation.

According to an embodiment, the wearable device 200 may convert an optical signal into an electrical signal by using the one or more light receiving circuits 327-2. The wearable device 200 may identify the light receiving signal 1201 by converting the optical signal into the electrical signal.

The wearable device 200 may convert the light receiving signal 1201 into a digital signal 1202 using an analog to digital converter (ADC). For example, the wearable device 200 may convert the light receiving signal 1201 into the digital signal 1202 based on the sampling operation. The wearable device 200 may sample the light receiving signal 1201 based on a designated sampling period. Since the digital signal 1202 identified through the sampling operation also includes noise, the quantization operation may be performed for noise filtering.

The wearable device 200 may change the digital signal 1202 into a quantized digital signal 1203 based on the quantization operation. For example, the wearable device 200 may perform the quantization operation based on integrating two or more sensor values for noise filtering. As an example, the wearable device 200 may determine an integrated value as an average value (or an intermediate value) for values in a predetermined time section. The wearable device 200 may set values of a predetermined time section as an integrated value. As the integrated value increases, the noise of the light receiving signal 1201 may be removed. According to an embodiment, the wearable device 200 may identify the identified integrated values as a second pattern (or bit information on the second pattern).

The wearable device 200 may identify the second pattern based on the quantized digital signal 1203. For example, in order to increase reliability, the wearable device 200 may identify a value of a section in which the quantized digital signal 1203 is greater than or equal to a reference value 1205 as a first value (e.g., '1') and identify a value of a section in which the quantized digital signal 1203 is less than the reference value 1205 as a second value (e.g., '0'). The wearable device 200 may identify the second pattern (e.g., '101010') based on the quantized digital signal 1203 and the reference value 1205. According to an embodiment, the above-described operations of the wearable device 200 may be preset through signal exchange between the electronic device 101 and the wearable device 200. At least one of the wearable device 200 and/or the electronic device 101 may identify whether the second pattern identified by the wearable device 200 corresponds to the first pattern.

According to an embodiment, accuracy may be improved as there is more sampling data and a sensing time is longer. However, as there are more sampling data and the sensing time is longer, noise may increase or usability may decrease. The electronic device 101 and/or the wearable device 200 may determine an optimal data magnitude. The electronic device 101 may set the output of the display 312 based on the optimal data magnitude. The wearable device 200 may set a sensing time based on the optimal data magnitude.

Referring to FIG. 12B, the wearable device 200 may not know a range of the light emitting signal outputted from the display 312. For example, in a case that sensitivity of one or more light-receiving circuits 327-2 is set high, light may be saturated and the light receiving signal may not be identified.

For example, the wearable device 200 may identify the second pattern based on a quantized digital signal 1211. The wearable device 200 may identify a value of a section in which the quantized digital signal 1211 is greater than or equal to a reference value 1213 as a first value (e.g., '1') and identify a value of a section in which the quantized digital signal 1211 is less than the reference value 1213 as a second value (e.g., '0'). The reference value 1213 is set too low, and the second pattern may be identified only as the first value.

According to an embodiment, the electronic device 101 may first transmit a maximum value and a minimum value of the light emitting signal to the wearable device 200. In an OLED-based display, the electronic device 101 may transmit the maximum value of the light emitting signal to the wearable device 200 based on displaying white. In an OLED-based display, the electronic device 101 may transmit the minimum value of the light emitting signal to the wearable device 200 based on displaying black.

The wearable device 200 may identify a maximum value and a minimum value of a quantized digital signal 1212 based on the maximum value and the minimum value of the light emitting signal. The wearable device 200 may identify a reference value 1214 based on the maximum value and the minimum value of the quantized digital signal 1212. For example, the wearable device 200 may identify the maximum value of the quantized digital signal 1212 in a time section 1215. In a time section 1216, the wearable device 200 may identify the minimum value of the quantized digital signal 1212. The wearable device 200 may identify a reference value 1204 based on the identified maximum value and minimum value. The wearable device 200 may identify the second pattern (e.g., '10101') after the time section 1216 based on the quantized digital signal 1212 and the reference value 1204.

Referring to FIG. 12C, the wearable device 200 may identify the second pattern based on a peak value of the light receiving signal. For example, the wearable device 200 may change a light receiving signal 1221 into a digital signal 1222 based on the sampling operation. The wearable device 200 may identify a peak value by identifying timings at which a value greater than a peripheral value of the digital signal 1222 does not exist. The wearable device 200 may identify time points (e.g., a time point 1223, a time point 1224, and a time point 1225) at which a peak value (or a valley value) occurs. The wearable device 200 may normalize a time interval between the time points at which the peak value occurs. The wearable device 200 may identify the second pattern based on the time interval. For example, a value of a time interval between the time point 1223 and the time point 1224 may be identified as a first value (e.g., '1'). A value of a time interval between the time point 1224 and the time point 1225 may be identified as a second value (e.g., '0'). The method for identifying the second pattern described in FIG. 12C has a higher algorithmic complexity than the method described in FIGS. 12A and 12B, and requires a large amount of sensing data, which may result in a longer sampling time. However, since the method for identifying the second pattern described in FIG. 12C is robust against noise in the optical signal, the second pattern may be identified more accurately.

According to the method illustrated in FIGS. 12A and/or 12C, a color and brightness of the display 312 may be changed, or the display 312 may blink. Accordingly, an unnatural screen may be provided to the user. By changing a display period and increasing a sampling period, the light emitting signal may be set such that the user does not recognize a change in the light emitting signal.

According to an embodiment, a direction of a PPG sensor 327 may be changed according to a direction in which the wearable device 200 is placed on the display 312. Accordingly, the electronic device 101 may radially output a light emitting signal. The electronic device 101 may improve accuracy of a light reception signal identified by the wearable device 200 by outputting a light emitting signal not only inside the area in which the wearable device 200 contacts, but also outside the area.

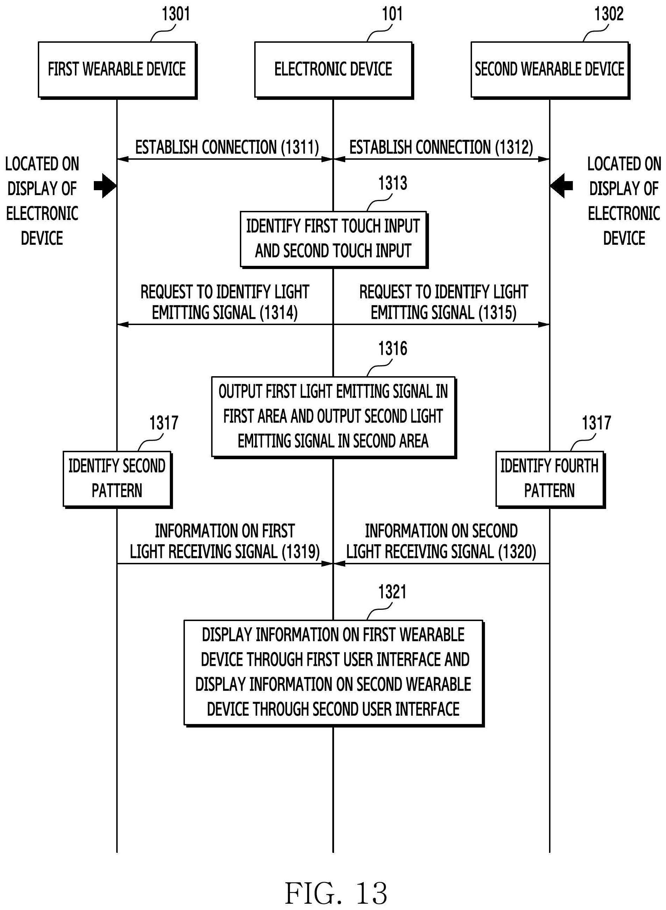

FIG. 13 illustrates an example of an operation of an electronic device and a plurality of wearable devices in a case that the plurality of wearable devices are located on a display of the electronic device.

Referring to FIG. 13, according to operation 1311 to operation 1321, an electronic device 101 may identify that the plurality of wearable devices are located on a display 312 of the electronic device 101. The electronic device 101 may display information on each of the plurality of wearable devices through the display 312. The plurality of wearable devices may include a first wearable device 1301 and a second wearable device 1302. Each of the first wearable device 1301 and the second wearable device 1302 may correspond to a wearable device 200.

In the operation 1311, the electronic device 101 may establish a connection with the first wearable device 1301. In operation 1312, the electronic device 101 may establish a connection with the second wearable device 1302. For example, the electronic device 101 may establish a connection with the first wearable device 1301 and the second wearable device 1302 using short-range communication (e.g., Bluetooth, BLE, or wireless LAN). An order of the operation 1311 and the operation 1312 may be changed.

In the operation 1311 and the operation 1312, after the electronic device 101 establishes a connection with the first wearable device 1301 and the second wearable device 1302, the first wearable device 1301 and the second wearable device 1302 may be located on the display 312 of the electronic device 101. For example, the first wearable device 1301 may be located in a first area on the display 312 of the electronic device 101. The second wearable device 1302 may be located in a second area on the display 312 of the electronic device 101.

In the operation 1313, the electronic device 101 may identify a first touch input of a designated shape and a second touch input of a designated shape. The electronic device 101 may identify the first touch input by the first wearable device 1301 in the first area. The electronic device 101 may identify the second touch input by the second wearable device 1302 in the second area. The electronic device 101 may not identify whether the device located in the first area is the first wearable device 1301 or the second wearable device 1302. The electronic device 101 may not identify whether the device located in the second area is the first wearable device 1301 or the second wearable device 1302. The electronic device 101 may perform the following operations to distinguish the devices located in the first area and the second area.

In the operation 1314, the electronic device 101 may request the first wearable device 1301 to identify a light emitting signal. For example, the electronic device 101 may transmit a signal causing the first wearable device 1301 to identify a light emitting signal to the first wearable device 1301.

In the operation 1315, the electronic device 101 may request the second wearable device 1302 to identify a light emitting signal. For example, the electronic device 101 may transmit a signal causing the second wearable device 1302 to identify a light emitting signal to the second wearable device 1302.

In the operation 1316, the electronic device 101 may output a first light emitting signal in the first area and a second light emitting signal in the second area. For example, the first light emitting signal may have a first pattern. The second light emitting signal may have a third pattern. The electronic device 101 may output the first light emitting signal based on the first pattern. The electronic device 101 may output the second light emitting signal based on the third pattern.

In the operation 1317, since the first wearable device 1301 is located in the first area on the display 312 of the electronic device 101, it may identify the first light emitting signal with the first pattern. The first wearable device 1301 may identify a first light receiving signal by using a light receiving circuit (or one or more light receiving circuits) of the first wearable device 1301 based on the first light emitting signal. The first light receiving signal may have a second pattern. The first wearable device 1301 may identify the second pattern of the first light receiving signal.

In the operation 1318, since the second wearable device 1302 is located in the second area on the display 312 of the electronic device 101, it may identify the second light emitting signal with the third pattern. The second wearable device 1302 may identify a second light receiving signal by using a light receiving circuit (or one or more light receiving circuits) of the second wearable device 1302 based on the second light emitting signal. The second light receiving signal may have a fourth pattern. The second wearable device 1302 may identify the fourth pattern of the second light receiving signal.

In the operation 1319, the first wearable device 1301 may transmit information on the first light receiving signal to the electronic device 101. The electronic device 101 may receive the information on the first light receiving signal from the first wearable device 1301. The information on the first light receiving signal may include information on the second pattern and/or information on an identifier of the first wearable device 1301.

The electronic device 101 may identify that the second pattern corresponds to the first pattern. The electronic device 101 may identify that the first wearable device 1301 is located in the first area based on the second pattern corresponding to the first pattern.

In the operation 1320, the second wearable device 1302 may transmit information on the second light receiving signal to the electronic device 101. The electronic device 101 may receive the information on the second light receiving signal from the second wearable device 1302. The information on the second light receiving signal may include information on the fourth pattern and/or information on an identifier of the second wearable device 1302.

The electronic device 101 may identify that the fourth pattern corresponds to the third pattern. The electronic device 101 may identify that the second wearable device 1302 is located in the second area based on the fourth pattern corresponding to the third pattern.

In the operation 1321, the electronic device 101 may display information on the first wearable device 1301 through a first user interface including the first area. The electronic device 101 may display information on the second wearable device 1302 through a second user interface including the second area. Operations for displaying the information on the first wearable device 1301 and operations for displaying the information on the second wearable device 1302 may be independently performed.

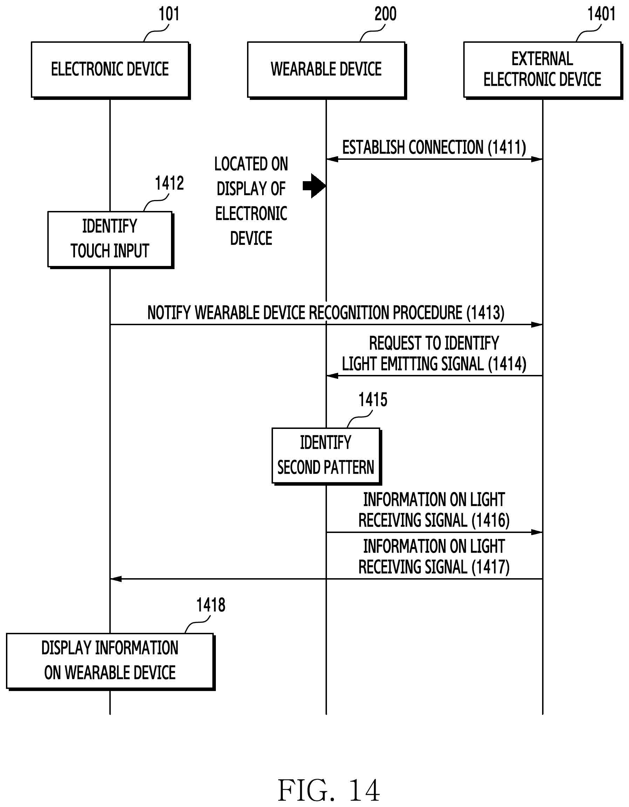

FIG. 14 illustrates an example of an operation of an electronic device, an external electronic device, and a wearable device in a case that the wearable device is connected with the external electronic device.

Referring to FIG. 14, an electronic device 101 may not be connected with a wearable device 200. The wearable device 200 may be connected with an external electronic device 1401. According to an embodiment, a user of the wearable device 200 and a user of the electronic device 101 may also be distinguished. For example, an account registered in the wearable device 200 and an account registered in the electronic device 101 may be different from each other.

In operation 1411, the wearable device 200 may establish a connection with the external electronic device 1401. A connection between the electronic device 101 and the wearable device 200 may not be established.

In a state that the connection between the electronic device 101 and the wearable device 200 has not been established, the wearable device 200 may be located on a display 312 of the electronic device 101.

In operation 1412, the electronic device 101 may identify a touch input of a designated shape. For example, based on identifying that at least one touch point configures a designated shape, the electronic device 101 may identify the touch input of the designated shape.

In operation 1413, the electronic device 101 may transmit, to the external electronic device 1401, a signal for notifying that a wearable device recognition procedure will be performed. The external electronic device 1401 may receive, from the electronic device 101, the signal for notifying that the wearable device recognition procedure will be performed.

For example, in a case that the electronic device 101 and the external electronic device 1401 are not connected, the electronic device 101 may transmit a signal for notifying that the wearable device recognition procedure will be performed based on broadcasting. For example, the electronic device 101 may transmit, to peripheral devices including the external electronic device 1401, a signal for notifying that the wearable device recognition procedure will be performed based on broadcasting.

According to an embodiment, in a case that the electronic device 101 and the external electronic device 1401 are connected, the electronic device 101 may request the external electronic device 1401 connected with the electronic device 101 to identify a light emitting signal emitted from an area corresponding to a touch input. The electronic device 101 may transmit a signal for requesting the external electronic device 1401 to identify a light emitting signal emitted from an area corresponding to a touch input. According to an embodiment, the electronic device 101 may transmit a signal for guiding the external electronic device 1401 that the wearable device recognition procedure will be performed.

In operation 1414, the external electronic device 1401 may request the wearable device 200 connected with the external electronic device 1401 to identify a light emitting signal outputted from the electronic device 101. The external electronic device 1401 may transmit a signal causing the wearable device 200 to identify a light emitting signal outputted from the electronic device 101 to the wearable device 200.

For example, the external electronic device 1401 may identify whether a wearable device connected to the external electronic device 1401 exists. The external electronic device 1401 may identify that the wearable device 200 is connected to the external electronic device 1401.

The external electronic device 1401 may identify whether it is in a state that the wearable device 200 connected with the external electronic device 1401 is worn by the user. Based on identifying that the wearable device 200 has not been worn by the user, the external electronic device 1401 may request the wearable device 200 to identify a light emitting signal outputted from the electronic device 101. Based on identifying that the wearable device 200 has been worn by the user, the external electronic device 1401 may identify that the wearable device 200 is not located on the display 312 of the electronic device 101. Accordingly, the external electronic device 1401 may request the wearable device 200 to identify a light emitting signal outputted from the electronic device 101 only when the wearable device 200 is not worn by the user.

In operation 1415, the wearable device 200 may identify the light emitting signal by identifying external light based on the request received from the external electronic device 1401. The wearable device 200 may obtain a light receiving signal based on the light emitting signal. The wearable device 200 may identify a second pattern related to the light receiving signal.

In operation 1416, the wearable device 200 may transmit information on the light receiving signal identified by the wearable device 200 to the external electronic device 1401. The external electronic device 1401 may receive the information on the light receiving signal identified by the wearable device 200 from the wearable device 200. For example, the information on the light receiving signal may indicate the second pattern on the light receiving signal.

According to an embodiment, the above-described operation 1415 may not be performed. For example, the wearable device 200 may detect the light emitting signal based on the light emitting signal identification request. The wearable device 200 may transmit information indicating that the light emitting signal is detected to the external electronic device 1401. The information indicating that the light emitting signal is detected may be an example of the information on the light receiving signal. For example, the wearable device 200 may also transmit only information indicating that the light emitting signal is detected to an external electronic device without identifying a second pattern related to the light receiving signal.

In operation 1417, the external electronic device 1401 may transmit the information on the light receiving signal received from the wearable device 200 to the electronic device 101. For example, the external electronic device 1401 may transmit authentication information of the wearable device 200 to the electronic device 101 together with the information on the light receiving signal received from the wearable device 200. The electronic device 101 may receive the information on the light receiving signal and the authentication information on the wearable device 200 from the external electronic device 1401.

In operation 1418, the electronic device 101 may display information on the wearable device 200. For example, the electronic device 101 may identify that the device located on the display 312 of the electronic device 101 is the wearable device 200 based on identifying that the second pattern related to the light receiving signal identified by the wearable device 200 corresponds to a first pattern related to the light emitting signal. The electronic device 101 may display information on the wearable device 200 through a user interface including an area corresponding to a touch input. For example, the electronic device 101 may establish a connection with the external electronic device 1401. The electronic device 101 may receive the information on the wearable device 200 from the external electronic device 1401 and display the received information on the wearable device 200 through the display 312.

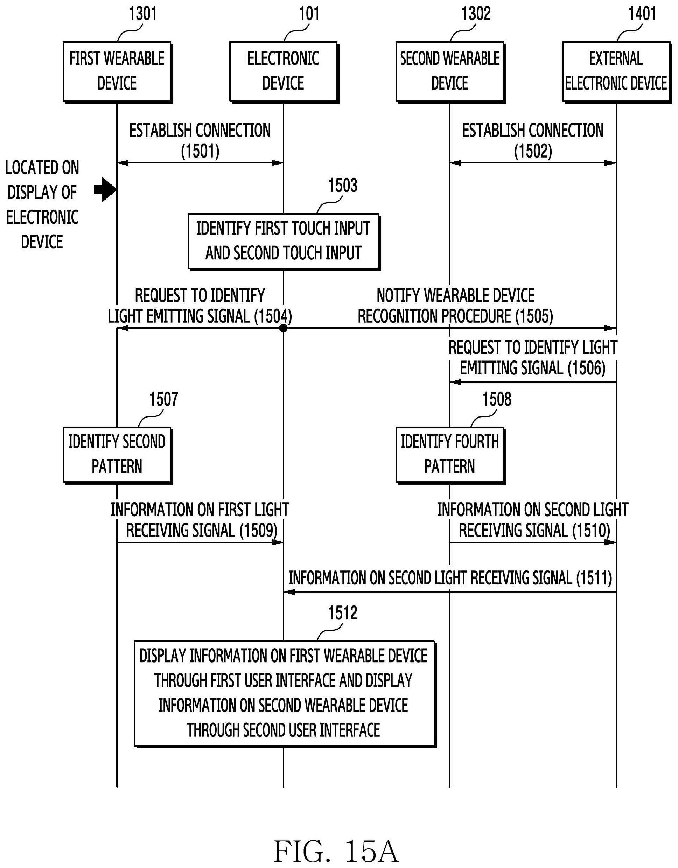

FIG. 15A illustrates an example of an operation of an electronic device, an external electronic device, and a plurality of wearable devices in a case that the plurality of wearable devices are located on a display of the electronic device.

Referring to FIG. 15A, in operation 1501, an electronic device 101 may establish a connection with a first wearable device 1301. The operation 1501 may correspond to the operation 1311 of FIG. 13.

In operation 1502, an external electronic device 1401 may establish a connection with a second wearable device 1302. The operation 1502 may correspond to the operation 1411 of FIG. 14.

After the first wearable device 1301 is connected with the electronic device 101 and the second wearable device 1302 is connected with the external electronic device 1401, the first wearable device 1301 may be located in a first area on a display 312 of the electronic device 101. After the first wearable device 1301 is connected with the electronic device 101 and the second wearable device 1302 is connected with the external electronic device 1401, the second wearable device 1302 may be located in a second area on the display 312 of the electronic device 101.

In operation 1503, the electronic device 101 may identify a first touch input of a designated shape and a second touch input of a designated shape. The electronic device 101 may identify a first touch input by the first wearable device 1301 in the first area. The electronic device 101 may identify a second touch input by the second wearable device 1302 in the second area. The electronic device 101 may not identify whether the device located in the first area is the first wearable device 1301 or the second wearable device 1302. The electronic device 101 may not identify whether the device located in the second area is the first wearable device 1301 or the second wearable device 1302. The electronic device 101 may perform the following operations to distinguish the devices located in the first area and the second area.

In operation 1504, the electronic device 101 may request the first wearable device 1301 connected with the electronic device 101 to identify a light emitting signal. For example, the electronic device 101 may transmit a signal causing the first wearable device 1301 to identify a light emitting signal to the first wearable device 1301. The operation 1504 may correspond to the operation 1314 of FIG. 13.

In operation 1505, the electronic device 101 may transmit, to the external electronic device 1401, a signal for notifying that a wearable device recognition procedure will be performed. The external electronic device 1401 may receive, from the electronic device 101, the signal for notifying that the wearable device recognition procedure will be performed. The operation 1505 may correspond to the operation 1413 of FIG. 14.

For example, in a case that the electronic device 101 and the external electronic device 1401 are not connected, the electronic device 101 may transmit a signal for notifying that the wearable device recognition procedure will be performed based on broadcasting. For example, the electronic device 101 may transmit, to peripheral devices including the external electronic device 1401, a signal for notifying that the wearable device recognition procedure will be performed based on broadcasting.

In operation 1506, the external electronic device 1401 may request the second wearable device 1302 to output a light emitting signal outputted from the electronic device 101.

In operation 1507, while the electronic device 101 outputs a first light emitting signal with a first pattern through the first area, the first wearable device 1301 located in the first area may obtain a first light receiving signal. The first wearable device 1301 may identify a second pattern related to the first light receiving signal.

In operation 1508, while the electronic device 101 outputs a second light emitting signal with a third pattern through the second area, the second wearable device 1302 located in the second area may obtain a second light receiving signal. The second wearable device 1302 may identify a fourth pattern related to the second light receiving signal.

In operation 1509, the first wearable device 1301 may transmit information on the first light receiving signal to the electronic device 101. The electronic device 101 may receive the information on the first light receiving signal from the first wearable device 1301.

The electronic device 101 may identify that the information on the first light receiving signal indicates the second pattern. The electronic device 101 may identify that the second pattern corresponds to the first pattern of the first light emitting signal outputted from the first area. The electronic device 101 may identify that the first wearable device 1301 is located in the first area.

In operation 1510, the second wearable device 1302 may transmit information on the second light receiving signal to the external electronic device 1401. The external electronic device 1401 may receive the information on the second light receiving signal from the second wearable device 1302.

In operation 1511, the external electronic device 1401 may transmit the information on the second light receiving signal received from the second wearable device 1302 to the electronic device 101. For example, the external electronic device 1401 may transmit authentication information of the second wearable device 1302 to the electronic device 101 together with the information on the second light receiving signal received from the second wearable device 1302. The electronic device 101 may receive the information on the second light receiving signal and the authentication information on the second wearable device 1302 from the external electronic device 1401.

The electronic device 101 may identify that the information on the second light receiving signal indicates the fourth pattern. The electronic device 101 may identify that the fourth pattern corresponds to the second pattern of the second light emitting signal outputted from the second area. The electronic device 101 may identify that the second wearable device 1302 is located in the second area.

In operation 1512, the electronic device 101 may display information on the first wearable device 1301 through a first user interface including the first area. The electronic device 101 may display information on the second wearable device 1302 through a second user interface including the second area.

For example, the electronic device 101 may directly receive the information on the first wearable device 1301 from the first wearable device 1301. The electronic device 101 may display the information on the first wearable device 1301 through the first user interface.

For example, the electronic device 101 may establish a connection with the external electronic device 1401. The electronic device 101 may receive information on the second wearable device 1302 from the external electronic device 1401 and display the received information on the second wearable device 1302 through the second user interface.

As an example, the electronic device 101 may display a screen for establishing a connection with the external electronic device 1401 through the display 312. The electronic device 101 may request to input information for establishing a connection with the external electronic device 1401 through the display 312. The electronic device 101 may establish a connection with the external electronic device 1401 based on the input for information for establishing a connection with the external electronic device 1401.

According to an embodiment, operations for displaying the information on the first wearable device 1301 and operations for displaying the information on the second wearable device 1302 may be independently performed.

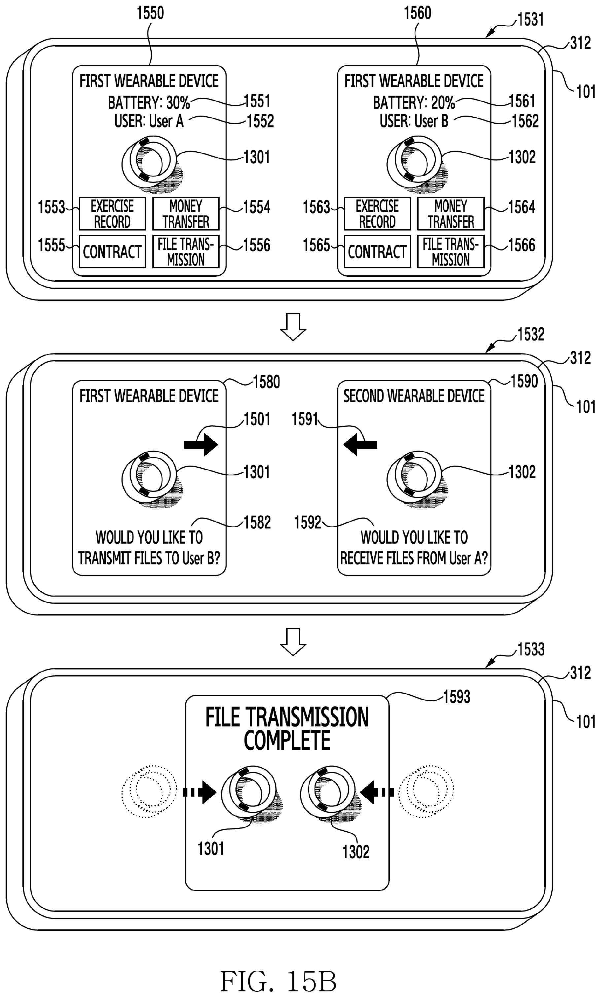

FIG. 15B illustrates an example of an operation of an electronic device, an external electronic device, and a plurality of wearable devices in a case that the plurality of wearable devices are located on a display of the electronic device.

Referring to FIG. 15B, according to the operation 1501 to the operation 1502 illustrated in FIG. 15A, the electronic device 101 may display the information on the first wearable device 1301 through the first area of the display 312. The electronic device 101 may display the information on the second wearable device 1302 through the second area of the display 312.

In a state 1531, the electronic device 101 may display a first user interface 1550 for providing the information on the first wearable device 1301 through the display 312. For example, the first user interface 1550 may include the first area in which the first wearable device 1301 is located. The electronic device 101 may display a second user interface 1560 for providing the information on the second wearable device 1302 through the display 312. For example, the second user interface 1560 may include the second area in which the second wearable device 1302 is located.

For example, the first user interface 1550 may include at least one of an element 1551 indicating information on remaining battery level of the first wearable device 1301, an element 1552 indicating information on the user of the first wearable device 1301, a visual object 1553 to provide an exercise record identified by the first wearable device 1301, a visual object 1554 to provide a money transaction function, a visual object 1555 to provide a contract function, and/or a visual object 1556 to provide a file transmission function.

For example, the second user interface 1560 may include at least one of an element 1561 indicating information on remaining battery level of the second wearable device 1302, an element 1562 indicating information on the user of the second wearable device 1302, a visual object 1563 to provide an exercise record identified by the second wearable device 1302, a visual object 1564 to provide a money transaction function, a visual object 1565 to provide a contract function, and/or a visual object 1566 to provide a file transmission function.

In a state 1532, at least one of an input to the visual object 1556 and an input to the visual object 1566 may be performed. The electronic device 101 may display a first user interface 1580 for file transmission and a second user interface 1590 for file transmission based on the at least one of an input to the visual object 1556 and an input to the visual object 1566. Based on the at least one of an input to the visual object 1556 and an input to the visual object 1566, the electronic device 101 may change the first user interface 1550 to the first user interface 1580, and change the second user interface 1560 to the second user interface 1590.

For example, the first user interface 1580 and the second user interface 1590 may be displayed based on an input to one of the visual object 1556 and the visual object 1566. For example, based on the input to the visual object 1556 and the input to the visual object 1566, the first user interface 1580 and the second user interface 1590 may be displayed.

The first user interface 1580 may include an affordance 1581 for file transmission and a text 1582 for checking whether the file is transmitted. The second user interface 1590 may include an affordance 1591 for file transmission and a text 1592 for checking whether the file is received.

In a state 1533, a location of the first wearable device 1301 may be moved according to the affordance 1581 on the display 312. A location of the second wearable device 1302 may be moved according to the affordance 1591 on the display 312. The electronic device 101 may display a third user interface 1593 based on the movement of the first wearable device 1301 and the movement of the second wearable device 1302. As the location of the first wearable device 1301 is moved, the electronic device 101 may move the first user interface 1580. As the location of the second wearable device 1302 is moved, the electronic device 101 may move the second user interface 1590. The electronic device 101 may display one third user interface 1593 based on identifying that a distance between the first wearable device 1301 and the second wearable device 1302 is within a designated distance. For example, the third user interface 1593 may be displayed to guide that the file transmission function has been performed. For example, as the first wearable device 1301 is moved in a direction toward the second wearable device 1302, the first user interface 1580 and the second user interface 1590 may overlap. The electronic device 101 may perform the file transmission function based on the first user interface 1580 and the second user interface 1590 overlapping.

In FIG. 15B, an example in which the file transmission function is performed according to the movement of the first wearable device 1301 and the second wearable device 1302 has been described, but is not limited thereto. At least one of contract signing, money transaction, and/or exercise record exchange may be performed according to the movement of the first wearable device 1301 and the second wearable device 1302.

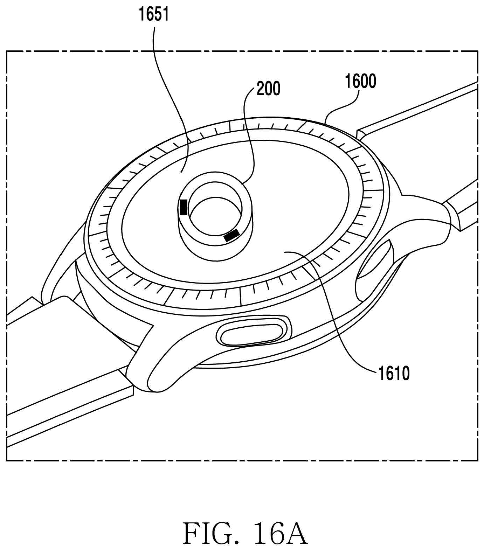

FIG. 16A illustrates an example of an operation of a watch-shaped wearable device and a ring-shaped wearable device.

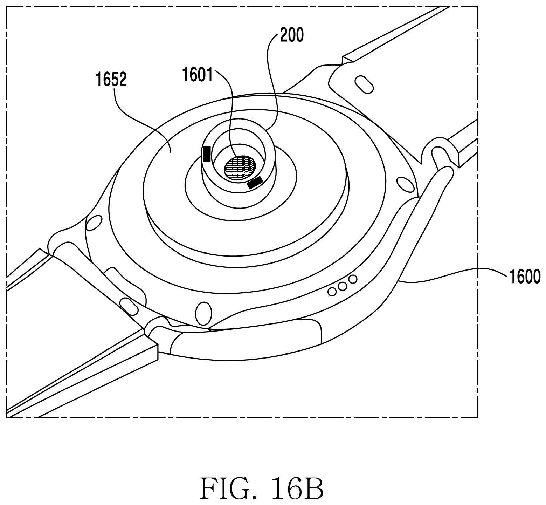

FIG. 16B illustrates an example of an operation of a watch-shaped wearable device and a ring-shaped wearable device.

Referring to FIGS. 16A and 16B, a wearable device 200 may be configured in a ring shape. A wearable device 1600 may be configured in a watch shape. The wearable device 1600 may include a display 1610 and a PPG sensor 1601. The display 1610 of the wearable device 1600 may be disposed on a first surface 1651 of the wearable device 1600. The PPG sensor 1601 of the wearable device 1600 may be disposed on a second surface 1652 opposite to the display 1610.

Referring to FIG. 16A, the wearable device 1600 may identify that the wearable device 200 is located on the display 1610. The wearable device 1600 may identify that the wearable device 200 is located on the display 1610 by performing the same or similar operation as an electronic device 101 according to the above-described embodiments. The wearable device 1600 may display information on the wearable device 200 on the display 1610.

Referring to FIG. 16B, the wearable device 200 may be located on the second surface 1652 of the wearable device 1600. The wearable device 1600 may output a light emitting signal with a first pattern by using a light emitting circuit of the PPG sensor 1601. The wearable device 200 may identify a light receiving signal by using one or more light receiving circuits 327-2 of a PPG sensor 327 based on the light emitting signal. The wearable device 200 may transmit information on the light receiving signal to the wearable device 1600. The wearable device 1600 may identify a second pattern related to the light receiving signal based on the information on the light receiving signal. The wearable device 1600 may display information on the wearable device 200 through a display 312 based on the second pattern corresponding to the first pattern.

FIGS. 16A and 16B illustrate examples of the operation of the ring-shaped wearable device 200 and the watch-shaped wearable device 1600, but are not limited thereto. The wearable device 1600 may be configured in a form not only a watch shape but also wearable on another part of a body.

According to an embodiment, an electronic device may include a display including at least one of an electromagnetic inductive circuit and a touch screen panel, a communication circuit, at least one processor including processing circuitry, and memory including one or more storage media storing instructions. The instructions, when being executed by the at least one processor individually or collectively, may cause the electronic device to identify a touch input of a designated shape. The instructions, when being executed by the at least one processor individually or collectively, may cause the electronic device to, in response to the touch input, output a light emitting signal with a first pattern through an area on the display, corresponding to the touch input. The instructions, when being executed by the at least one processor individually or collectively, may cause the electronic device to obtain, using the communication circuit, information on a light receiving signal identified by a wearable device after outputting the light emitting signal. The instructions, when being executed by the at least one processor individually or collectively, may cause the electronic device to identify, based on the information on the light receiving signal, a second pattern related to the light receiving signal. The instructions, when being executed by the at least one processor individually or collectively, may cause the electronic device to identify, based on the second pattern corresponding to the first pattern, that the wearable device is located on the display. The instructions, when being executed by the at least one processor individually or collectively, may cause the electronic device to display, through the display, information on the wearable device.

According to an embodiment, the instructions, when being executed by the at least one processor individually or collectively, may cause the electronic device to identify, using at least one of the electromagnetic inductive circuit and the touch screen panel, at least one touch point. The instructions, when being executed by the at least one processor individually or collectively, may cause the electronic device to, based on identifying that a shape formed along the at least one touch point corresponds to the designated shape, identify the touch input of the designated shape.

According to an embodiment, the instructions, when being executed by the at least one processor individually or collectively, may cause the electronic device to display a visual effect indicating that one of at least one wearable device is located on the display, within the area.

According to an embodiment, the instructions, when being executed by the at least one processor individually or collectively, may cause the electronic device to, in response to the touch input, transmit, to at least one wearable device including the wearable device, a signal causing the at least one wearable device connected with the electronic device to identify the light emitting signal. The instructions, when being executed by the at least one processor individually or collectively, may cause the electronic device to receive the information on the light receiving signal from the wearable device.

According to an embodiment, the instructions, when being executed by the at least one processor individually or collectively, may cause the electronic device to, in response to the touch input, transmit, to an external electronic device, a signal causing the external electronic device to identify the light emitting signal through the wearable device connected with the external electronic device. The instructions, when being executed by the at least one processor individually or collectively, may cause the electronic device to receive, using the communication circuit, the information on the light receiving signal from the external electronic device.

According to an embodiment, the instructions, when being executed by the at least one processor individually or collectively, may cause the electronic device to configure the first pattern based on at least one of brightness, a color, or an emission period of light outputted from the area.

According to an embodiment, the electronic device may include a camera, and a fingerprint sensor. The instructions, when being executed by the at least one processor individually or collectively, may cause the electronic device to, in response to the touch input, transmit, to at least one wearable device including the wearable device, a signal causing output of a light emitting signal with a designated pattern. The instructions, when being executed by the at least one processor individually or collectively, may cause the electronic device to, after transmitting the signal, identify that a light receiving signal identified using at least one of the camera and the fingerprint sensor has the designated pattern. The instructions, when being executed by the at least one processor individually or collectively, may cause the electronic device to, based on identifying that the light receiving signal identified using at least one of the camera and the fingerprint sensor has the designated pattern, identify that the wearable device is located on the display.

According to an embodiment, the information on the light receiving signal may include an identifier of the wearable device.

According to an embodiment, the instructions, when being executed by the at least one processor individually or collectively, may cause the electronic device to identify, based on the second pattern corresponding to the first pattern, that a distance between the wearable device and the electronic device is within a designated distance using the communication circuit. The instructions, when being executed by the at least one processor individually or collectively, may cause the electronic device to, based on identifying that the distance between the wearable device and the electronic device is within the designated distance, identify that the wearable device is located on the display.

According to an embodiment, the instructions, when being executed by the at least one processor individually or collectively, may cause the electronic device to identify another touch input of the designated shape. The instructions, when being executed by the at least one processor individually or collectively, may cause the electronic device to, in response to the another touch input, output another light emitting signal with a third pattern through another area on the display, corresponding to the another touch input. The instructions, when being executed by the at least one processor individually or collectively, may cause the electronic device to obtain, using the communication circuit, information on another light receiving signal identified by another wearable device after outputting the another light emitting signal. The instructions, when being executed by the at least one processor individually or collectively, may cause the electronic device to identify, based on the information on the another light receiving signal, a fourth pattern related to the another light receiving signal. The instructions, when being executed by the at least one processor individually or collectively, may cause the electronic device to identify, based on the fourth pattern corresponding to the third pattern, that the another wearable device is located in the another area.

According to an embodiment, the another wearable device may be connected with another external electronic device.

According to an embodiment, the instructions, when being executed by the at least one processor individually or collectively, may cause the electronic device to receive the information on the light receiving signal identified by the wearable device from the wearable device. The instructions, when being executed by the at least one processor individually or collectively, may cause the electronic device to receive the information on the another light receiving signal identified by the another wearable device from the another external electronic device.

According to an embodiment, the instructions, when being executed by the at least one processor individually or collectively, may cause the electronic device to display information on the another wearable device within the another area while the information on the wearable device is displayed within the area.

According to an embodiment, the instructions, when being executed by the at least one processor individually or collectively, may cause the electronic device to, based on that at least one of the another wearable device and the wearable device moves on the display, change locations of a first visual object for displaying the information on the wearable device and a second visual object for displaying the information on the another wearable device. The instructions, when being executed by the at least one processor individually or collectively, may cause the electronic device to, based on identifying that a distance between the first visual object and the second visual object is within a designated distance, display a third visual object related to the first visual object and the second visual object.

According to an embodiment, a method performed by an electronic device, may include identifying a touch input of a designated shape. The method may include, in response to the touch input, outputting a light emitting signal with a first pattern through an area on the display, corresponding to the touch input. The method may include obtaining, using the communication circuit, information on a light receiving signal identified by a wearable device after outputting the light emitting signal. The method may include identifying, based on the information on the light receiving signal, a second pattern related to the light receiving signal. The method may include identifying, based on the second pattern corresponding to the first pattern, that the wearable device is located on the display. The method may include displaying, through the display, information on the wearable device.

According to an embodiment, the method may include identifying, using at least one of an electromagnetic inductive circuit and a touch screen panel of the electronic device, at least one touch point. The method may include, based on identifying that a shape formed along the at least one touch point corresponds to the designated shape, identifying the touch input of the designated shape.

According to an embodiment, the method may include displaying a visual effect indicating that one of at least one wearable device is located on the display, within the area.

According to an embodiment, the method may include, in response to the touch input, transmitting, to at least one wearable device including the wearable device, a signal causing the at least one wearable device connected with the electronic device to identify the light emitting signal. The method may include receiving the information on the light receiving signal from the wearable device.

According to an embodiment, the method may include, in response to the touch input, transmitting, to an external electronic device, a signal causing the external electronic device to identify the light emitting signal through the wearable device connected with the external electronic device. The method may include receiving, using the communication circuit, the information on the light receiving signal from the external electronic device.

According to an embodiment, a non-transitory computer readable storage medium may store one or more programs. The one or more programs may include instructions, which, when being executed by a processor of an electronic device with a display including at least one of an electromagnetic inductive circuit and a touch screen panel, and a communication circuit, cause the electronic device to identify a touch input of a designated shape. The one or more programs may include instructions, which, when being executed by the processor, cause the electronic device to, in response to the touch input, output a light emitting signal with a first pattern through an area on the display, corresponding to the touch input. The one or more programs may include instructions, which, when being executed by the processor, cause the electronic device to obtain, using the communication circuit, information on a light receiving signal identified by a wearable device after outputting the light emitting signal. The one or more programs may include instructions, which, when being executed by the processor, cause the electronic device to identify, based on the information on the light receiving signal, a second pattern related to the light receiving signal. The one or more programs may include instructions, which, when being executed by the processor, cause the electronic device to identify, based on the second pattern corresponding to the first pattern, that the wearable device is located on the display. The one or more programs may include instructions, which, when being executed by the processor, cause the electronic device to display, through the display, information on the wearable device.

According to the above-described embodiment, in a state that an electronic device including a touch screen, such as a smartphone or a tablet, is placed on a floor, and in a case that a wearable device with no display or a small display is placed on the display of the electronic device, the electronic device may identify an ID of the wearable device. The electronic device may provide information on the wearable device through the display based on the ID of the wearable device.

The electronic device may quickly and easily identify a location in which the wearable device is placed on the display and the ID of the wearable device without requesting an additional action from a user. The electronic device may provide an intuitive user experience by displaying the information on the wearable device through a user interface that includes an area in which the wearable device is placed.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device comprising:
a display comprising at least one of an electromagnetic inductive circuit and a touch screen panel;
a communication circuit;
at least one processor comprising processing circuitry; and
memory comprising one or more storage media storing instructions,
wherein the instructions, when being executed by the at least one processor individually or collectively, cause the electronic device to:
identify a touch input of a designated shape,
in response to the touch input, output a light emitting signal with a first pattern through an area on the display, corresponding to the touch input,
obtain, using the communication circuit, information on a light receiving signal identified by a wearable device after outputting the light emitting signal,
identify, based on the information on the light receiving signal, a second pattern related to the light receiving signal,
identify, based on the second pattern corresponding to the first pattern, that the wearable device is located on the display, and
display, through the display, information on the wearable device.

2. The electronic device of claim 1, wherein the instructions, when being executed by the at least one processor individually or collectively, further cause the electronic device to:
identify, using at least one of the electromagnetic inductive circuit and the touch screen panel, at least one touch point, and
based on identifying that a shape formed along the at least one touch point corresponds to the designated shape, identify the touch input of the designated shape.

3. The electronic device of claim 2, wherein the instructions, when being executed by the at least one processor individually or collectively, further cause the electronic device to display a visual effect indicating that one of at least one wearable device is located on the display, within the area.

4. The electronic device of claim 1, wherein the instructions, when being executed by the at least one processor individually or collectively, further cause the electronic device to:
in response to the touch input, transmit, to at least one wearable device comprising the wearable device, a signal causing the at least one wearable device connected with the electronic device to identify the light emitting signal, and
receive the information on the light receiving signal from the wearable device.

5. The electronic device of claim 1, wherein the instructions, when being executed by the at least one processor individually or collectively, further cause the electronic device to:
in response to the touch input, transmit, to an external electronic device, a signal causing the external electronic device to identify the light emitting signal through the wearable device connected with the external electronic device, and
receive, using the communication circuit, the information on the light receiving signal from the external electronic device.

6. The electronic device of claim 1, wherein the instructions, when being executed by the at least one processor individually or collectively, further cause the electronic device to configure the first pattern based on at least one of brightness, a color, or an emission period of light outputted from the area.

7. The electronic device of claim 1, further comprising:
a camera; and
a fingerprint sensor,
wherein the instructions, when being executed by the at least one processor individually or collectively, further cause the electronic device to:
in response to the touch input, transmit, to at least one wearable device comprising the wearable device, a signal causing output of a light emitting signal with a designated pattern,
after transmitting the signal, identify that a light receiving signal identified using at least one of the camera and the fingerprint sensor has the designated pattern, and
based on identifying that the light receiving signal identified using at least one of the camera and the fingerprint sensor has the designated pattern, identify that the wearable device is located on the display.

8. The electronic device of claim 1, wherein the information on the light receiving signal further comprises an identifier of the wearable device.

9. The electronic device of claim 1, wherein the instructions, when being executed by the at least one processor individually or collectively, further cause the electronic device to:
identify, based on the second pattern corresponding to the first pattern, that a distance between the wearable device and the electronic device is within a designated distance using the communication circuit, and
based on identifying that the distance between the wearable device and the electronic device is within the designated distance, identify that the wearable device is located on the display.

10. The electronic device of claim 1, wherein the instructions, when being executed by the at least one processor individually or collectively, further cause the electronic device to:
identify another touch input of the designated shape,
in response to the another touch input, output another light emitting signal with a third pattern through another area on the display, corresponding to the another touch input,
obtain, using the communication circuit, information on another light receiving signal identified by another wearable device after outputting the another light emitting signal,
identify, based on the information on the another light receiving signal, a fourth pattern related to the another light receiving signal, and
identify, based on the fourth pattern corresponding to the third pattern, that the another wearable device is located in the another area.

11. The electronic device of claim 10, wherein the another wearable device is connected with another external electronic device.

12. The electronic device of claim 11, wherein the instructions, when being executed by the at least one processor individually or collectively, further cause the electronic device to:
receive the information on the light receiving signal identified by the wearable device from the wearable device, and
receive the information on the another light receiving signal identified by the another wearable device from the another external electronic device.

13. The electronic device of claim 12, wherein the instructions, when being executed by the at least one processor individually or collectively, further cause the electronic device to display information on the another wearable device within the another area while the information on the wearable device is displayed within the area.

14. A method performed by an electronic device, comprising:
identifying a touch input of a designated shape,
in response to the touch input, outputting a light emitting signal with a first pattern through an area on the display, corresponding to the touch input,
obtaining, using the communication circuit, information on a light receiving signal identified by a wearable device after outputting the light emitting signal,
identifying, based on the information on the light receiving signal, a second pattern related to the light receiving signal,
identifying, based on the second pattern corresponding to the first pattern, that the wearable device is located on the display, and
displaying, through the display, information on the wearable device.

15. A non-transitory computer readable storage medium storing one or more programs, the one or more programs comprising instructions, which, when being executed by a processor of an electronic device with a display comprising at least one of an electromagnetic inductive circuit and a touch screen panel, and a communication circuit, cause the electronic device to:
identify a touch input of a designated shape,
in response to the touch input, output a light emitting signal with a first pattern through an area on the display, corresponding to the touch input,
obtain, using the communication circuit, information on a light receiving signal identified by a wearable device after outputting the light emitting signal,
identify, based on the information on the light receiving signal, a second pattern related to the light receiving signal,
identify, based on the second pattern corresponding to the first pattern, that the wearable device is located on the display, and
display, through the display, information on the wearable device.
